(19)

Europäisches Patentamt
European Patent Office
Office européen des brevets

(11) **EP 4 442 107 A1**

(12) **EUROPÄISCHE PATENTANMELDUNG**

(43) Veröffentlichungstag:
**09.10.2024 Patentblatt 2024/41**

(21) Anmeldenummer: **24162538.3**

(22) Anmeldetag: **11.03.2024**

(51) Internationale Patentklassifikation (IPC):
**A01F 15/07** (2006.01) **A01F 15/08** (2006.01)
**A01B 59/042** (2006.01) **A01B 67/00** (2006.01)
**A01B 69/00** (2006.01)

(52) Gemeinsame Patentklassifikation (CPC):
**A01B 69/004; A01F 15/07; A01F 15/08;**
**A01F 15/0883**

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **06.04.2023 DE 102023108813**

(71) Anmelder: **Deere & Company**
**Moline, IL 61265 (US)**

(72) Erfinder: **Guiet, Lionel**
**Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **KOMBINATION UND VERFAHREN ZUM BETRIEB EINER KOMBINATION**

(57) Die Erfindung betrifft eine Kombination (1) aus einem Zugfahrzeug (10) mit einem Antriebssystem (70) und einer mittels einer Deichsel (14) vom Zugfahrzeug (10) gezogenen Ballenpresse (12). Die Kombination (1) umfasst eine Steuereinheit (60), wobei die Steuereinheit (60) mit dem Antriebssystem (70) und der Ballenpresse (12) und einem Aktuator (54) verbunden ist. Mit dem Aktuator (12) ist ein Winkel zwischen der Deichsel (14) und der Ballenpresse (12) einstellbar und/oder verstellbar. Die Steuereinheit (60) ist betreibbar ist, das Antriebssystem (70) und/oder den Aktuator (54) derart anzusteuern, dass die Kombination (1) von einer ersten Position (P1) in eine Entladeposition (P2) bewegt wird, und die Ballenpresse (12) derart anzusteuern, dass der Ballen (210) an der Entladeposition (P2) entladen wird, und das Antriebssystem (70) und/oder den Aktuator (54) derart anzusteuern, dass die Kombination (1) von der Entladeposition (P2) in die erste Position (P1) zurückbewegt wird. Die Erfindung betrifft weiter ein Verfahren zum Betrieb einer Kombination.

FIG. 2

Processed by Luminess, 75001 PARIS (FR)

EP 4 442 107 A1

**Beschreibung**

Die Erfindung betrifft eine Kombination gemäss dem Oberbegriff des unabhängigen Anspruchs 1 und ein Verfahren zum Betrieb einer Kombination gemäss dem Oberbegriff des unabhängigen Anspruchs 12.

Ballenpressen, insbesondere Rundballenpressen oder Quaderballenpressen, werden zum Aufnehmen und Pressen von Erntegut, beispielsweise Stroh, Heu oder dergleichen eingesetzt. Die Ballenpresse kann dazu eine Aufnahmeeinheit zum Aufnehmen des Ernteguts umfassen, insbesondere zur Aufnahme des Ernteguts aus einem Schwad. Dabei kann das auf dem Boden liegende Erntegut mit der Aufnahmeeinheit, insbesondere einer Pick-up, aufgenommen werden. Die Ballenpresse kann auch eine Presskammer umfassen. Die Presskammer kann eines oder mehrere Pressmittel umfassen. Die Presskammer kann das von der Aufnahmeeinheit aufgenommene Erntegut aufnehmen und zu einem Ballen pressen. Die Ballenpresse kann ausserdem eine Fördereinheit umfassen. Das von der Aufnahmeeinheit aufgenommene Erntegut kann mit der Fördereinheit, beispielsweise einem Rotor, in die Presskammer geleitet werden. Die Fördereinheit kann als Teil der Aufnahmeeinheit ausgebildet sein oder der Aufnahmeeinheit nachgeordnet sein, insbesondere in Förderrichtung nachgeordnet sein. In der Presskammer wird der Ballen, insbesondere der Rundballen oder der Quaderballen, geformt. Der fertig geformte Ballen kann im Anschluss in der Presskammer mit einem Wickelmaterial, beispielsweise Netz, Folie oder Bindegarn, umwickelt werden. Der fertig geformte Ballen oder der fertig umwickelte Ballen, kann über eine Auswurfeinheit, beispielsweise eine Auswurfklappe oder ein Heckteil oder eine Heckklappe der Ballenpresse, insbesondere über die mit einer Auswurfeinheit versehene Presskammer, entladen oder ausgeworfen werden.

Nachteile beim Entladen oder Auswerfen des fertig geformten oder umwickelten Ballens aus der Ballenpresse sind, dass der Ballen mit bekannten Kombinationen nur entlang einer Längsmittelachse der Ballenpresse entladbar ist und/oder nicht einer von einem Bediener der Kombination gewünschten Position und/oder in die gewünschte Richtung entladbar ist und/oder der Ballen nach dem Auswerfen wegrollen kann. Darüber hinaus ist es nicht möglich den Ballen, wenn die Kombination entlang eines Schwads fährt, in eine zum Schwad vorgebbare Richtung, insbesondere unter einem zum Schwad vorgegebenen Winkel, zu entladen, ohne die Kombination zu stoppen und in die gewünschte Richtung zu manövrieren. Typischerweise muss der Bediener die Kombination, nachdem ein Ballen fertig geformt oder fertig umgewickelt ist, aufwändig an die gewünschte Position und/oder in die gewünschte Richtung lenken und/oder fahren und die Ballenpresse ausrichten, um den Ballen an der vom Bediener gewünschten Position und/oder in die gewünschte Richtung auswerfen zu können.

Der vorliegenden Erfindung liegt daher die Aufgabe zugrunde eine Kombination und ein Verfahren zum Betrieb einer Kombination vorzuschlagen, durch welche die vorgenannten Probleme überwunden werden. Insbesondere sollen eine Kombination und ein Verfahren zum Betrieb einer Kombination vorgeschlagen werden, die es ermöglichen den Ballen in einer vorgegebene Richtung und/oder unter einem vorgegebenen Winkel und/oder an einer vorgegebenen oder berechneten Position zu entladen bzw. aus der Ballenpresse auszuwerfen.

Diese Aufgabe wird durch eine Kombination mit den Merkmalen des Anspruchs 1 und ein Verfahren mit den Merkmalen des Anspruchs 12 gelöst. Die abhängigen Ansprüche beziehen sich auf besonders vorteilhafte Ausführungsformen der Erfindung.

Erfindungsgemäss wird eine Kombination aus einem Zugfahrzeug mit einem Antriebssystem zum Antreiben der Kombination und einer mittels einer Deichsel vom Zugfahrzeug gezogenen Ballenpresse vorgeschlagen, insbesondere eine Ballenpresse mit einem Ballensystem zum Formen eines Ballens. Die Kombination umfasst eine Steuereinheit, wobei die Steuereinheit mit dem Antriebssystem und der Ballenpresse und einem Aktuator verbunden ist. Mit dem Aktuator ist ein Winkel zwischen der Deichsel, insbesondere der Längsmittelachse der Deichsel, und der Ballenpresse, insbesondere der Längsmittelachse der Ballenpresse, einstellbar und/oder verstellbar. Die Steuereinheit ist betreibbar, insbesondere in Abhängigkeit von einem Entladesignal, das Antriebssystem und/oder den Aktuator derart anzusteuern, dass die Kombination, bevorzugt das Zugfahrzeug und/oder die Ballenpresse, von einer ersten Position, insbesondere einer aktuellen Position, in eine Entladeposition, insbesondere eine zweite Position, bewegt wird oder bewegbar ist. Die Entladeposition kann dabei eine vorgegebene und/oder berechnete Position sein. Mit anderen Worten, das Antriebssystem und/oder der Aktuator sind mit der Steuereinheit, insbesondere in Abhängigkeit von einem Entladesignal, derart ansteuerbar und/oder einstellbar und/oder verstellbar, dass die Kombination, bevorzugt das Zugfahrzeug und/oder die Ballenpresse, von einer ersten Position, insbesondere einer aktuellen Position, in eine Entladeposition, insbesondere eine zweite Position, bewegt wird. Die Steuereinheit ist weiter betreibbar, die Ballenpresse derart anzusteuern, dass der Ballen an der Entladeposition entladen oder ausgeworfen wird bzw. entladbar oder auswerfbar ist, insbesondere wenn die Kombination in oder an der Entladeposition ist bzw. angelangt ist. Mit anderen die Ballenpresse ist mit der Steuereinheit derart ansteuerbar und/oder einstellbar und/oder verstellbar, dass der Ballen an der Entladeposition entladen oder ausgeworfen wird bzw. entladbar oder auswerfbar ist, insbesondere wenn die Kombination in oder an der Entladeposition ist bzw. angelangt ist. Die Steuereinheit ist weiter betreibbar, das Antriebssystem und/oder den Aktuator derart anzusteuern, dass die Kombination, insbesondere von der Entladeposition bzw. der zweiten Position, in die erste Position, insbesondere der aktuellen Position, zurückbewegt wird, insbesondere nachdem der Ballen entladen ist. Mit anderen Worten, das Antriebssystem und/oder den Aktuator sind mit der Steuereinheit derart ansteuerbar und/oder einstellbar und/oder verstellbar, dass die Kombination, insbesondere von der Entladeposition bzw. der zweiten Position, in die erste Position zurückbewegt wird, insbesondere nachdem der Ballen entladen ist.

Im Speziellen kann die Steuereinheit, insbesondere in Abhängigkeit vom Entladesignal, betreibbar sein, den Aktuator derart anzusteuern, und/oder insbesondere einzustellen und/oder zu verstellen, dass ein Entladewinkel zwischen der Deichsel, insbesondere der Längsmittelachse der Deichsel, und der Ballenpresse, insbesondere der Längsmittelachse der Ballenpresse einstellbar ist, sodass die Ballenpresse von der ersten Position an die Entladeposition bewegt wird. Mit anderen Worten, der Aktuator kann mit der Steuereinheit, insbesondere in Abhängigkeit vom Entladesignal, derart ansteuerbar sein, dass ein Entladewinkel zwischen der Deichsel, insbesondere der Längsmittelachse der Deichsel, und der Ballenpresse, insbesondere der Längsmittelachse der Ballenpresse, eingestellt ist oder einstellbar ist. Dadurch kann die Ballenpresse an die Entladeposition bewegt werden, und/oder in eine vorgegebene Richtung, aus der Ballenpresse entladen werden. Im Speziellen kann die Steuereinheit, insbesondere in Abhängigkeit von einem Entladesignal, betreibbar sein, den Aktuator derart anzusteuern, und/oder insbesondere einzustellen und/oder zu verstellen, dass die Ballenpresse von der ersten Position, insbesondere einer aktuellen Position, in die Entladeposition, insbesondere eine zweite Position, bewegt wird. Darüber hinaus kann die Steuereinheit, insbesondere in Abhängigkeit von einem Entladesignal, betreibbar sein, den Aktuator derart anzusteuern, insbesondere einzustellen und/oder zu verstellen, dass der Entladewinkel zwischen der Deichsel, insbesondere der Längsmittelachse der Deichsel, und der Ballenpresse, insbesondere der Längsmittelachse der Ballenpresse, einstellbar ist und die Ballenpresse von der ersten Position, insbesondere der aktuellen Position, in die Entladeposition, insbesondere die zweite Position, bewegt wird. Ebenso kann die Steuereinheit, insbesondere in Abhängigkeit von einem Entladesignal, betreibbar sein, das Antriebssystem derart anzusteuern, insbesondere einzustellen und/oder zu verstellen, dass die Kombination, insbesondere das Zugfahrzeug und/oder die Ballenpresse, von der ersten Position, insbesondere der aktuellen Position, an die oder zu der Entladeposition, insbesondere der zweiten Position, bewegt wird oder bewegbar ist. Der Ballen kann an der Entladeposition auswerfbar, insbesondere auf den Boden bzw. einen Untergrund entladbar sein. Im Speziellen kann der Aktuator mit der Steuereinheit, insbesondere in Abhängigkeit vom Entladesignal, derart ansteuerbar und insbesondere der Entladewinkel mit der Steuereinheit derart ermittelbar, bevorzugt berechenbar, und einstellbar sein, dass der Ballen aus der Ballenpresse an der Entladeposition und/oder in einem vorgegebenen Winkel zu einer Solllinie des Schwads, insbesondere einer Längsmittelachse des Schwads, aus der Ballenpresse auswerfbar ist.

Der Winkel zwischen der Deichsel und der Ballenpresse kann insbesondere anhand oder mit der Längsmittelachse der Deichsel und der Längsmittelachse der Ballenpresse ermittelt werden. Beispielsweise kann der Winkel bzw. der Entladewinkel anhand einer Position oder Länge des Aktuators, insbesondere eine Länge des ausgefahrenen Kolbens, ermittelt werden, insbesondere in Form einer Look-up Tabelle und/oder der oder die Rückkopplungssensoren ermitteln den Winkel in Form eines Winkelsignals. Die Steuereinheit kann mit dem Aktuator den Winkel auf den Entladewinkel einstellen und/oder verstellen. Der Aktuator und/oder der oder die Rückkopplungssensoren können der Steuereinheit den eingestellten Entladewinkel bestätigen. In einer ersten Ausführung kann der Winkel zwischen der Deichsel und der Ballenpresse also derart einstellbar sein, dass dieser dem Entladewinkel entspricht. Ebenso kann der Winkel zwischen der Deichsel und der Ballenpresse auch derart eingestellt oder einstellbar sein, dass der Entladewinkel zwischen der Deichsel und der Ballenpresse in Abhängigkeit oder in Bezug auf die Solllinie des Schwads einstellbar ist. Die Solllinie des Schwads kann dabei insbesondere einer Längsmittelachse des Schwads entsprechen. Der Entladewinkel kann sich aus der Differenz der Winkel zwischen Ballenpresse, insbesondere Längsmittelachse der Ballenpresse, und Solllinie des Schwads, insbesondere Längsmittelachse des Schwads, und zwischen Deichsel, insbesondere Längsmittelachse der Deichsel, und Solllinie des Schwads, insbesondere Längsmittelachse des Schwads, ergeben. Der Entladewinkel ergibt sich dann wie folgt:

$$EW = |WB - WD|$$

mit

WB = Winkel zwischen Ballenpresse und Solllinie des Schwads

WD = Winkel zwischen Deichsel und Solllinie des Schwads

Auf diese Weise kann erreicht werden, dass mit der Kombination bzw. der Ballenpresse der Ballen nicht nur entlang einer Längsmittelachse der Ballenpresse entladbar ist, sondern in eine, insbesondere vom Bediener, vorgegebene Richtung und/oder Position und/oder Winkel.

Das Zugfahrzeug kann ein landwirtschaftliches Zugfahrzeug sein, insbesondere ein Traktor oder ein Schlepper. Das Zugfahrzeug kann in einer Fahrtrichtung vor der Ballenpresse angeordnet sein. Das Zugfahrzeug kann die Ballenpresse ziehen. Das Zugfahrzeug kann ausserdem eine Lenkeinrichtung zum Lenken des Zugfahrzeugs umfassen. Das Zugfahrzeug kann ein Antriebssystem zum Antreiben des Zugfahrzeugs umfassen. Das Zugfahrzeug, insbesondere das Antriebssystem, kann einen Antriebsmotor, beispielsweise eine Verbrennungskraftmaschine oder einen Elektromotor, umfassen. Das Zugfahrzeug, insbesondere das Antriebssystem, kann eine Getriebeeinheit, insbesondere ein Getriebe, umfassen. Das Antriebssystem und/oder seine Komponenten, beispielsweise der Antriebsmotor und/oder das Getriebe, können mit der Steuereinheit verbunden und/oder ansteuerbar, insbesondere einstellbar und/oder verstellbar sein. Das Zugfahrzeug kann vom oder mit dem Antriebssystem, insbesondere dem Antriebsmotor, antreibbar oder angetrieben sein. Im Speziellen können eines oder mehrere Bodeneingriffsmittel des Zugfahrzeugs direkt oder mit dem Antriebssystem, beispielsweise über die Getriebeeinheit mit dem Antriebsmotor, verbunden sein, insbesondere antreibbar verbunden und/oder mechanisch gekoppelt sein. Die Bodeneingriffsmittel können vom Antriebssystem, insbesondere dem Antriebsmotor und/oder Getriebe derart antreibbar sein, dass das Zugfahrzeug beispielsweise in einer Vorwärts- und/oder Rückwärtsrichtung bewegbar ist. Ausserdem kann der Antriebsmotor mit einer Antriebswelle der Ballenpresse verbunden sein, insbesondere antreibbar verbunden und/oder mechanisch gekoppelt sein. Dadurch kann der Antriebsmotor über die Antriebswelle eine Drehzahl und/oder ein Drehmoment an die Ballenpresse übertragen. Die Ballenpresse kann über die Antriebswelle und/oder über eine Zugvorrichtung, beispielsweise die Deichsel und/oder eine Kupplung, mit dem Zugfahrzeug verbunden, insbesondere mechanisch verbunden und/oder mechanisch gekoppelt sein. Im Speziellen können das Zugfahrzeug und die Ballenpresse mittels der Deichsel miteinander verbunden, insbesondere miteinander gekoppelt und/oder mechanisch verbunden sein. Beispielsweise kann ein Zugfahrzeugrahmen des Zugfahrzeugs über die oder mit der Zugvorrichtung mit einem Ballenpressenrahmen der Ballenpresse verbunden sein. Das Zugfahrzeug kann den Zugfahrzeugrahmen umfassen. Das Zugfahrzeug kann das oder die Bodeneingriffsmittel umfassen. Die Bodeneingriffsmittel können das Zugfahrzeug auf dem Boden abstützen und/oder tragen. Der Zugfahrzeugrahmen des Zugfahrzeugs kann sich auf Vorder- und Hinterrädern abstützen. Die Bodeneingriffsmittel können Räder oder Raupen oder Ketten sein. Die Bodeneingriffsmittel, insbesondere die Vorderräder und Hinterräder, können lenkbar und/oder beweglich sein. Das Zugfahrzeug, insbesondere das Antriebssystem, kann mindestens eine Vorderachse und mindestens eine Hinterachse umfassen. Mindestens eine der beiden Achsen kann antreibbar bzw. angetrieben sein. Mindestens eine der beiden Achsen, insbesondere die Vorderachse, kann lenkbar sein, bevorzugt mit einer Lenkeinrichtung, besonders bevorzugt mit einem Lenkaktuator ansteuerbar und/oder einstellbar und/oder verstellbar sein. Ebenso können die Vorderachse und/oder die Hinterachse lenkbar sein. Der Lenkaktuator kann beispielsweise in Form eines Hydraulikzylinders oder Pneumatikzylinders oder Gewindetriebs oder Zahnstangentriebs oder Elektrozylinder ausgebildet sein. Im Speziellen kann das Zugfahrzeug eine lenkbare Vorderachse und mit dem Antriebssystem antreibbare Vorder- und/oder Hinterräder umfassen.

Die Ballenpresse kann eine Quaderballenpresse zum Bilden von Quaderballen oder eine Rundballenpresse zum Bilden von Rundballen aus Erntegut sein. Die Ballenpresse kann einen Ballenpressenrahmen umfassen. Ebenso kann die Ballenpresse in das Zugfahrzeug integriert sein, also die Kombination als selbstfahrende Ballenpresse ausgebildet sein. Die Ballenpresse kann durch Räder auf dem Erdboden abgestützt sein. Die Ballenpresse kann ein Ballensystem umfassen. Das Ballensystem kann zum Formen von Ballen ausgebildet sein. Die Ballenpresse, insbesondere das Ballensystem, kann die Aufnahmeeinheit, insbesondere eine Pick-up, zum Aufnehmen von Erntegut umfassen. Das Erntegut kann als ein Schwad angeordnet sein. Die Aufnahmeeinheit kann das Erntegut in Form des Schwads aufnehmen. Die Ballenpresse, insbesondere das Ballensystem, kann auch eine Presskammer umfassen. Die Presskammern kann eines oder mehrere Pressmitteln umfassen. Die Ballenpresse, insbesondere das Ballensystem, kann ausserdem eine Fördereinheit, beispielsweise einen Rotor oder ein Förderband, umfassen. Mit dem Ballensystem, insbesondere mit der Presskammer, kann der Ballen, insbesondere in einer Pressphase, geformt werden. Die Ballenpresse, insbesondere das Ballensystem, kann eine Wickeleinrichtung zum Umwickeln des fertig geformten Ballens mit einem Wickelmaterial, beispielsweise Netz, Folie oder Bindegarn, umfassen. Der fertig geformte Ballen kann, insbesondere in der Presskammer, mit dem Wickelmaterial umwickelt werden. Die Ballenpresse, insbesondere das Ballensystem, kann eine Auswurfeinheit, beispielsweise eine Auswurfklappe oder ein Heckteil oder eine Heckklappe der Ballenpresse, umfassen. Der Ballen, bevorzugt der fertig geformte Ballen oder der fertig umwickelte Ballen, kann über die Auswurfeinheit, insbesondere über die mit der Auswurfeinheit versehene Presskammer, entladen oder ausgeworfen werden. Die Ballenpresse kann mit einer größenveränderlichen Presskammer bzw. als Ballenpresse mit variabler Presskammer ausgebildet sein. Die Ballenpresse mit größenveränderlichen Presskammer kann eines oder mehrere Pressmittel umfassen, wobei das Pressmittel insbesondere als Riemen oder Gurt oder Kettenanordnung oder Band ausgebildet sein kann. Ebenso kann die Ballenpresse auch eine größenunveränderliche Presskammer umfassen. Hierbei kann ein Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden. Die Auswurfeinheit kann einen Teil der Presskammer, insbesondere einen Teil der Pressmittel, umfassen und/oder als ein Teil der Presskammer ausgebildet sein. Die Presskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld liegt oder steht, und/oder zum Befördern des Ernteguts in die Presskammer kann ebenfalls am Ballenpressenrahmen angeordnet, bevorzugt mit diesem verbunden und/oder an diesem befestigt sein.

Im Speziellen kann der Aktuator, insbesondere ein erster Aktuator, zum Einstellen und/oder Verstellen eines Winkels zwischen der Deichsel, insbesondere der Längsmittelachse der Deichsel, und der Ballenpresse, insbesondere der Längsmittelachse der Ballenpresse, ausgebildet und/oder eingerichtet sein. Die Ballenpresse kann also mit dem Aktuator gegenüber dem Zugfahrzeug in seitlicher Richtung, also insbesondere horizontal und/oder senkrecht zu einer Längsmittelachse der Ballenpresse, steuerbar und/oder einstellbar und/oder verstellbar, insbesondere lenkbar und/oder verschwenkbar sein. Die Steuereinheit kann über eine Ventilanordnung, insbesondere eine erste Ventilanordnung, mit dem Aktuator verbunden sein. Der Aktuator kann beispielsweise in Form eines Hydraulikzylinders oder Pneumatikzylinder oder Hebekissen oder Gewindetrieb oder Zahnstangentrieb oder Elektrozylinder ausgebildet sein. Der Aktuator kann einen Endes, beispielsweise mit dem Kolben, an der Deichsel und anderen Endes, beispielsweise mit oder dem Zylinder, mit der Ballenpresse, beispielsweise am Ballenpressenrahmen, verbunden, insbesondere schwenkbar befestigt oder angelenkt sein. Ebenso kann der Aktuator auch umgekehrt mit der Deichsel und der Ballenpresse verbunden sein. Die Ballenpresse kann ausserdem einen oder mehrere Rückkopplungssensoren umfassen. Der Rückkopplungssensor kann mit der Steuereinheit verbunden sein und die Steuereinheit über den Winkel, insbesondere den aktuellen Winkel, zwischen der Deichsel und der Ballenpresse, insbesondere zwischen deren Längsmittelachsen informieren. Ebenso kann die Steuereinheit den Winkel aber auch anhand der Stellung des Aktuators, insbesondere des Kolbens zum Zylinder, ermitteln bzw. berechnen, beispielsweise indem die Länge des ausgefahrenen Kolbens ermittelt wird.

Das Entladesignal kann vom Bediener manuell mit einer Ein- und Ausgabeeinheit generiert und an die Steuereinheit gesendet werden oder von der Steuereinheit generiert werden, beispielsweise wenn:

- Bevor die Pressphase abgeschlossen ist, beispielsweise wenige Sekunde davor, oder wenn die Pressphase abgeschlossen ist. Der Abschluss der Pressphase bzw. des Pressvorgangs kann vorliegen, wenn der Ballen fertig geformt ist, also beispielsweise eine gewünschte Grösse (beispielsweise Durchmesser, Radius, Volumen) erreicht hat.

- Während oder bevor eine Wickelphase abgeschlossen ist, beispielsweise wenige Sekunde davor, oder wenn die Wickelphase abgeschlossen ist. Der Abschluss der Wickelphase bzw. des Wickelvorgangs kann vorliegen, wenn der Ballen vollständig mit Wickelmaterial umwickelt ist.

- Bevor oder während sich die Auswurfeinheit der Ballenpresse öffnet.

Die Ballenpresse, insbesondere das Ballensystem, kann einen oder mehrere Ballensensoren zur Erfassung einer Grösse des Ballens, beispielsweise ein Volumen oder Durchmesser oder eines Radius des Ballens, und/oder eine Spannung der Pressmittel und/oder eine Verteilung des Ernteguts umfassen, insbesondere eine seitliche Verteilung des Ernteguts. Der oder die Ballensensoren können die Grösse des Ballens und/oder eine Spannung der Pressmittel oder eine Verteilung des Ernteguts in Form eines Ballensignals erfassen. Der oder die Ballensensoren können an oder im Ballensystem, insbesondere an oder in der Presskammer und/oder der Aufnahmeeinheit, angeordnet sein. Der oder die Ballensensoren können beispielsweise über eine Breite der Presskammer und/oder der Aufnahmeeinheit verteilt sein, um insbesondere eine gleichmäßige Verteilung des Ernteguts in der Presskammern und somit gleichförmige Ballen zu erhalten. Der oder die Ballensensoren können mit der Steuereinheit verbunden sein. Das Ballensignal kann von dem oder den Ballensensoren an die Steuereinheit gesendet bzw. von der Steuereinheit von dem oder den Ballensensoren empfangen werden. Die Steuereinheit kann das Entladesignal generieren, wenn die Steuereinheit mit dem Ballensignal ermittelt, dass die Grösse des Ballens eine vorgegebene Grösse, also eine Zielgrösse, erreicht hat, also die Grösse des Ballens ≥ einer Zielgrösse ist. Ebenso kann die Steuereinheit mit dem Ballensignal ermitteln, dass die Spannung der Pressmittel eine vorgegebene Zielspannung erreicht hat, also insbesondere die Spannung ≥ einer Zielspannung ist, und/oder die Verteilung des Ernteguts eine vorgegebene Zielverteilung erreicht hat, und somit der Ballen vorgegebene Grösse erreicht hat. Hat der Ballen eine vorgegebene Grösse erreicht, also die Zielgrösse oder die Zielspannung oder eine Zielverteilung erreicht, kann der Abschluss der Pressphase bzw. des Pressvorgangs vorliegen. Im Speziellen kann die Steuereinheit das Entladesignal in Abhängigkeit vom Ballensignal generieren, kurz bevor die Pressphase abgeschlossen ist, beispielsweise wenige Sekunde davor, oder wenn die Pressphase abgeschlossen ist.

Die Ballenpresse, insbesondere das Ballensystem, kann einen oder mehrere Wickelsensoren zur Erfassung des Zustands bzw. Status der Umwicklung des Ballens umfassen, beispielsweise einen Ultraschallsensor und/oder einen Schallsensor und/oder Kamera.

Ebenso kann der Wickelsensor aber auch die Länge des abgerollten Wickelmaterials erfassen. Der oder die Wickelsensoren können den Zustand oder Status der Umwicklung des Ballens in Form eines Wickelsignals erfassen. Der oder die Wickelsensoren können an oder im Ballensystem und/oder an oder in der Presskammer angeordnet sein. Der oder die Wickelsensoren können mit der Steuereinheit verbunden sein. Das Wickelsignal kann von dem oder den Wickelsensoren an die Steuereinheit gesendet bzw. von der Steuereinheit von dem oder den Wickelsensoren empfangen werden. Im Speziellen kann die Steuereinheit das Entladesignal in Abhängigkeit vom Wickelsignal generieren. Die Steuereinheit kann das Entladesignal generieren, wenn die Steuereinheit das Wickelsignal empfängt, oder die Steuereinheit mit dem Wickelsignal ermittelt oder berechnet hat, dass der Ballen fertig umwickelt ist. Die Steuereinheit kann mit dem Wickelsignal den Status der Wickelphase und/oder den Abschluss der Wickelphase ermitteln. Ebenso kann aber auch das Wickelsignal den Abschluss Wickelphase anzeigen. Der Status der Wickelphase kann während der Wickelphase sein oder kurz bevor die Wickelphase abgeschlossen ist, beispielsweise wenige Sekunde davor, oder die Wickelphase kann abgeschlossen sein. Die Steuereinheit kann das Entladesignal in Abhängigkeit vom Status generieren, also während der Wickelphase oder kurz bevor die Wickelphase abgeschlossen ist, beispielsweise wenige Sekunde davor, oder die Wickelphase abgeschlossen ist. Der Abschluss der Wickelphase bzw. des Wickelvorgangs kann vorliegen, wenn der Ballen vollständig oder fertig mit Wickelmaterial umwickelt ist.

Wesentlich für die Erfindung ist, dass die Kombination vorteilhafterweise mit der Steuereinheit, also insbesondere automatisch, zwischen der aktuellen Position und der Entladeposition bewegt wird und an der Entladeposition der Ballen entladen wird. Auf diese Weise kann vorteilhafterweise erreicht werden, dass mit der Kombination bzw. der Ballenpresse der Ballen in eine, insbesondere vom Bediener, vorgegebene Richtung und/oder Position und/oder Winkel entladen werden kann. Von Vorteil ist weiter, dass der Ballen dadurch derart abgelegt werden kann, dass der Ballen nach dem Auswerfen nicht wegrollen kann und/oder in einer zum Aufsammeln der Ballen vorgegebene und vorteilhaften Position abliegt. Im Speziellen kann der Ballen auch vorteilhaft in Bezug die die Solllinie des Schwads abgelegt werden. Darüber hinaus kann die Kombination durch die Ansteuerung des Antriebssystems vorteilhafterweise automatisch an die Entladeposition fahren.

In Ausgestaltung der Erfindung ist die Steuereinheit betreibbar, den Entladewinkel und/oder die Entladeposition zu bestimmen, insbesondere mit der Steuereinheit der Entladewinkel und/oder die Entladeposition bestimmbar, bevorzugt ermittelbar und/oder berechenbar. Die Entladeposition kann zumindest teilweise in Abhängigkeit von einer Neigung an der Entladeposition bestimmbar sein. Die Steuereinheit kann also derart betreibbar sein, dass die Entladeposition zumindest teilweise in Abhängigkeit von einer Neigung an der Entladeposition bestimmbar ist. Darunter kann auch verstanden werden, dass die Steuereinheit mit einem zentralen Server kommuniziert und der zentrale Server den Entladewinkel und/oder die Entladeposition bestimmen und/oder ermitteln kann und der zentrale Server den Entladewinkel und/oder die Entladeposition an die Steuereinheit übermittelt. Die Entladeposition kann beispielsweise derart ermittelt werden, dass die Entladeposition der Kombination, insbesondere des Zugfahrzeugs und/oder der Ballenpresse, beispielweise nicht an einem Hang oder parallel zum Hang ist, sodass der Ballen nicht den Hang herunterrollt. Die Entladeposition kann aber auch derart ermittelt oder vorgegeben werden, dass die vorgegebene Entladeposition eingehalten wird, insbesondere auch zu einer Solllinie des Schwads eingehalten wird. Vorteilhafterweise kann können dadurch der Entladewinkel und/oder die Entladeposition in Abhängigkeit von der Position der Kombination, insbesondere des Zugfahrzeugs und/oder der Ballenpresse, ermittelt werden und/oder der Ballen sicher und an der vorgegebenen Position entladen werden. Darüber hinaus kann der Ballen derart abgelegt werden, dass dieser in einem nachfolgende Sammelvorgang, also wenn die Ballen vom Feld eingesammelt werden, schnell und mit einem kurzen Sammelweg eingesammelt werden kann.

In Ausgestaltung der Erfindung umfasst die Kombination, insbesondere die Ballenpresse, einen oder mehrere Neigungssensoren zur Erfassung der Neigung in Form eines Neigungssignals. Der Neigungssensor ist mit der Steuereinheit verbunden. Die Steuereinheit empfängt das Neigungssignal vom Neigungssensor und/oder der Neigungssensor sendet das Neigungssignal an die Steuereinheit. Die Steuereinheit ist derart betreibbar, dass mit der oder durch die Steuereinheit in Abhängigkeit vom Neigungssignal der Entladewinkel und/oder eine Entladeposition der Kombination, insbesondere der Ballenpresse, bestimmbar und/oder ermittelbar ist, also insbesondere berechenbar ist. Mit anderen Worten, die Steuereinheit kann derart betreibbar sein, dass die Steuereinheit mit dem Neigungssignal den Entladewinkel und/oder die Entladeposition bestimmen und/oder ermitteln kann. Darunter kann auch verstanden werden, dass die Steuereinheit das Neigungssignal mit einem Funkmodul an einen zentralen Server übermittelt und der zentrale Server den Entladewinkel und/oder die Entladeposition bestimmen und/oder ermitteln kann und der zentrale Server den Entladewinkel und/oder die Entladeposition an die Steuereinheit übermittelt. Unter der Neigung kann dabei beispielsweise die Seitenneigung des Erdbodens oder eine Hangneigung an der Position, an der die Kombination, insbesondere das Zugfahrzeug und/oder die Ballenpresse, steht, verstanden werden. Die Seitenneigung des Erdbodens oder die Hangneigung kann hierbei der Neigungswinkel zwischen einer Hangfläche und der Horizontalen sein. Wird der Entladewinkel in Abhängigkeit von der Neigung ermittelt, kann die Neigung ausgeglichen wird, sodass der Ballen nicht einen Hang herunterrollt. Der Entladewinkel kann aber auch derart ermittelt oder vorgegeben werden, dass der vorgegebene Winkel zu einer Solllinie des Schwads eingehalten wird. Vorteilhafterweise kann können dadurch der Entladewinkel und/oder die Entladeposition von der Neigung des Untergrunds ermittelt werden und der Ballen sicher und an der vorgegebenen Position entladen werden. Darüber hinaus kann der Ballen derart, insbesondere in Bezug auf den Schwad, abgelegt werden, dass dieser in einem nachfolgende Sammelvorgang, also wenn der Ballen vom Feld eingesammelt wird, schnell und mit einem kurzen Sammelweg eingesammelt werden kann.

In Ausgestaltung der Erfindung umfasst die Kombination eine oder mehrere GPS-Einrichtung zur Bestimmung der Position der Kombination, insbesondere des Zugfahrzeugs und/oder der Ballenpresse, in Form eines Positionssignals. Die Position der Kombination kann die erste Position, insbesondere die aktuelle Position sein. Die Steuereinheit ist mit der GPS-Einrichtung verbunden. Die Steuereinheit empfängt das Positionssignal von der GPS-Einrichtung und/oder die GPS-Einrichtung sendet das Positionssignal an die Steuereinheit. Die Steuereinheit ist derart betreibbar, dass mit der oder durch Steuereinheit in Abhängigkeit vom Positionssignal ein bzw. der Entladewinkel und/oder eine oder die Entladeposition bestimmbar und/oder ermittelbar ist, also insbesondere berechenbar ist. Mit anderen Worten, die Steuereinheit kann derart betreibbar sein, dass die Steuereinheit mit dem Positionssignal den Entladewinkel und/oder die Entladeposition bestimmen und/oder ermitteln kann. Darunter kann auch verstanden werden, dass die Steuereinheit das Positionssignal mit dem Funkmodul an einen zentralen Server übermittelt und der zentrale Server den Entladewinkel und/oder die Entladeposition bestimmen und/oder ermitteln kann und der zentrale Server den Entladewinkel und/oder die Entladeposition an die Steuereinheit übermittelt. Mit der GPS-Einrichtung kann eine Position bzw. das Positionssignal versendbar und/oder empfangbar sein, und/oder insbesondere berechenbar sind. Die GPS-Einrichtung kann beispielsweise eine GPS-Antenne und einen Speicher umfassen. Im Speicher kann die Position des der Kombination, insbesondere des Zugfahrzeugs und/oder der Ballenpresse gespeichert sein. Ebenso kann eine Position des Schwads oder der Solllinie des Schwads, die beispielsweise aus vorherigen Bearbeitungsvorgängen des Schwads bekannt sein kann, gespeichert sein. Die Entladeposition kann beispielsweise derart ermittelt werden, dass die Entladeposition der Kombination, insbesondere des Zugfahrzeugs und/oder der Ballenpresse, beispielweise nicht an einem Hang oder parallel zum Hang ist, sodass der Ballen nicht den Hang herunterrollt. Die Entladeposition kann aber auch derart ermittelt oder vorgeben werden, dass die vorgegebene Entladeposition eingehalten wird, insbesondere auch zu einer Solllinie des Schwads eingehalten wird. Vorteilhafterweise kann können dadurch der Entladewinkel und/oder die Entladeposition in Abhängigkeit von der Position der Kombination, insbesondere des Zugfahrzeugs und/oder der Ballenpresse, ermittelt werden und der Ballen sicher und an der vorgegebenen Position entladen werden. Darüber hinaus kann der Ballen derart abgelegt werden, dass dieser in einem nachfolgende Sammelvorgang, also wenn die Ballen vom Feld eingesammelt werden, schnell und mit einem kurzen Sammelweg eingesammelt werden kann.

In Ausgestaltung der Erfindung, umfasst die Kombination, insbesondere das Zugfahrzeug und/oder die Ballenpresse, eine oder mehrere Lenkeinrichtungen. Die Kombination, insbesondere das Zugfahrzeug und/oder die Ballenpresse, können aber auch eine Lenksteuerung umfassen, die mit der Lenkeinrichtung verbunden sein kann. Die Steuereinheit ist mit der Lenkeinrichtung verbunden. Ebenso kann die Steuereinheit mit der Lenksteuerung verbunden sein oder die Lenksteuerung als Teil oder Bestandteil der Steuereinheit ausgebildet sein. Die Steuereinheit ist, insbesondere in Abhängigkeit vom Entladesignal, betreibbar, die Lenkeinrichtung derart anzusteuern, dass die Kombination, insbesondere das Zugfahrzeug und/oder die Ballenpresse, mit der Lenkeinrichtung lenkbar und/oder steuerbar ist, insbesondere an die Entladeposition lenkbar und/oder steuerbar ist. Mit anderen Worten, die Lenkeinrichtung ist mit der Steuereinheit derart ansteuerbar, dass die Kombination, insbesondere das Zugfahrzeug und/oder die Ballenpresse, bevorzugt in Abhängigkeit vom Entladesignal, lenkbar und/oder steuerbar ist, insbesondere an die Entladeposition lenkbar und/oder steuerbar ist. Im Speziellen kann die Kombination, insbesondere das Zugfahrzeug und/oder die Ballenpresse eine oder mehrere Erfassungseinrichtungen, beispielsweise in Form einer Kamera umfassen, Die Erfassungseinrichtung kann beispielsweise an der Vorder- und/oder Rückseite des Zugfahrzeugs und/oder der Vorder- und/oder Rückseite der Ballenpresse, angeordnet oder angebracht sein. Die Erfassungseinrichtung kann den Schwad in Form eines Erfassungssignal, beispielsweise ein Bild, ein Videosignal oder ein Abstand, erfassen, insbesondere optisch erfassen. Die Erfassungseinrichtung kann mit der Steuereinheit und/oder einem Bildverarbeitungssystem verbunden sein. Die Erfassungseinrichtung kann das Erfassungssignal an die Steuereinheit und/oder das Bildverarbeitungssystem senden. Das Bildverarbeitungssystem kann eine Solllinie des Schwads, insbesondere die Längsmittelachse des Schwads bestimmen. Ebenso kann das Bildverarbeitungssystem ein Lenksignal an die Lenksteuerung der Kombination und/oder die Steuereinheit senden bzw. die Steuereinheit und/oder die Lenksteuerung können das Lenksignal empfangen. Ebenso kann die Steuereinheit oder die Lenksteuerung ein Lenksignal in Abhängigkeit vom Erfassungssignal oder der Solllinie des Schwads erzeugen bzw. generieren. Die Lenkeinrichtung kann die Lenksteuerung und einen Lenkaktuator umfassen. Der Lenkaktuator kann beispielsweise ein Hydraulikzylinders oder Pneumatikzylinder oder Gewindetrieb oder Zahnstangentrieb oder Elektrozylinder sein, mit welchem die Vorder- und/oder Hinterachse und/oder die Bodeneingriffsmittel, insbesondere die Vorderräder, verstellbar und/oder einstellbar sind. Mit der Lenksteuerung und/oder der Steuereinheit kann die Lenkeinrichtung, insbesondere der Lenkaktuator, die Vorder- und/oder Hinterachse und/oder die Bodeneingriffsmittel derart ansteuern, insbesondere einstellen und/oder verstellen, dass das Zugfahrzeug, insbesondere die Längsmittelachse des Zugfahrzeugs, in Abhängigkeit vom Lenksignal, insbesondere automatisch, gelenkt und/oder gesteuert wird. Mit der Lenksteuerung und/oder der Steuereinheit kann die Lenkeinrichtung, insbesondere der Lenkaktuator, die Vorder- und/oder Hinterachse und/oder die Bodeneingriffsmittel derart ansteuern, insbesondere einstellen und/oder verstellen, dass das Zugfahrzeug, insbesondere die Längsmittelachse des Zugfahrzeugs, in Abhängigkeit vom Lenksignal zumindest näherungsweise auf der Solllinie des Schwads, die der Längsmittelachse des Schwads entspricht, geführt wird. Ebenso kann die Lenkeinrichtung, insbesondere der Lenkaktuator, mit der Lenksteuerung und/oder der Steuereinheit die Bodeneingriffsmittel, insbesondere die lenkbaren Vorderräder des Zugfahrzeugs, derart ansteuern, insbesondere einstellen und/oder verstellen, dass die Kombination, insbesondere das Zugfahrzeug und/oder die Ballenpresse, mit der Lenkeinrichtung, insbesondere in Abhängigkeit vom Entladesignal und/oder Lenksignal, an die Entladeposition lenkbar ist. Vorteilhafterweise kann dadurch die Kombination automatisch, insbesondere an die Entladeposition, gelenkt werden.

In Ausgestaltung der Erfindung umfasst die Kombination, insbesondere das Zugfahrzeug, eine Ein- und Ausgabeeinheit. Die Steuereinheit ist mit der Ein- und Ausgabeeinheit verbunden, wobei mit der Ein- und Ausgabeeinheit ein Entladesignal generierbar und an die Steuereinheit übermittelbar, insbesondere sendbar ist, und/oder das Entladesignal mit der Steuereinheit empfangbar ist. Der Bediener der Kombination kann beispielsweise auf Knopfdruck oder mittels eines Sprachbefehls das Entladesignal mit der Ein- und Ausgabeeinheit auslösen. Vorteilhafterweise kann dadurch der Bediener der Kombination das Entladesignal manuell generieren.

In Ausgestaltung der Erfindung ist das Entladesignal mit der Steuereinheit generierbar,

- Bevor die Pressphase abgeschlossen ist, beispielsweise wenige Sekunde davor, oder wenn die Pressphase abgeschlossen ist. Der Abschluss der Pressphase bzw. des Pressvorgangs kann vorliegen, wenn der Ballen fertig geformt ist, also beispielsweise eine gewünschte Grösse (beispielsweise Durchmesser, Radius, Volumen) erreicht hat.
- Während oder bevor eine Wickelphase abgeschlossen ist, beispielsweise wenige Sekunde davor, oder wenn die Wickelphase abgeschlossen ist. Der Abschluss der Wickelphase bzw. des Wickelvorgangs kann vorliegen, wenn der Ballen vollständig mit Wickelmaterial umwickelt ist.
- Bevor oder während sich die Auswurfeinheit der Ballenpresse öffnet.

Vorteilhafterweise kann dadurch das Entladesignal automatisch generiert werden. Ausserdem kann dadurch die Entladeposition ohne Zeitverlust angefahren und der Entladewinkel eingestellt werden.

In Ausgestaltung der Erfindung ist die Steuereinheit betreibbar, die Kombination, insbesondere eine Auswurfeinheit der Ballenpresse, derart anzusteuern, dass der Ballen, insbesondere der fertig gepresste oder fertig umwickelte Ballen, ausgeworfen wird, wenn der Entladewinkel und/oder die Entladeposition eingestellt ist, insbesondere die Kombination die Entladeposition erreicht hat und der Entladewinkel eingestellt ist. Mit anderen Worten, die Kombination, insbesondere die Auswurfeinheit der Ballenpresse, kann mit der Steuereinheit derart ansteuerbar sein, dass der Ballen ausgeworfen wird, wenn der Entladewinkel und/oder die Entladeposition eingestellt ist. Ebenso kann die Kombination, insbesondere das Zugfahrzeug, die Ein- und Ausgabeeinheit umfassen, und die Steuereinheit mit der Ein- und Ausgabeeinheit verbunden sein. Mittels oder mit der Ein- und Ausgabeeinheit, kann ein Auswurfsignal generierbar und an die Steuereinheit sendbar sein. Ebenso kann aber auch die Steuereinheit das Auswurfsignal generieren, wenn der Entladewinkel und/oder die Entladeposition eingestellt ist. Die Steuereinheit kann in Abhängigkeit vom Auswurfsignal, insbesondere in Abhängigkeit vom Empfang des Auswurfsignals, betreibbar sein, die Kombination, insbesondere die Auswurfeinheit, derart anzusteuern, dass der Ballen auswerfbar ist, wenn der Entladewinkel und/oder die Entladeposition eingestellt ist, insbesondere die Kombination die Entladeposition erreicht hat und/oder der Entladewinkel eingestellt ist. Die Kombination, insbesondere die Ballenpresse, kann einen weiteren Aktuator, beispielsweise einen zweiten Aktuator umfassen. Der weitere Aktuator kann zum Einstellen und/oder Verstellen der Auswurfeinheit, beispielsweise eine Auswurfklappe oder ein Heckteil oder eine Heckklappe der Ballenpresse, ausgebildet und/oder eingerichtet sein. Mit dem weiteren Aktuator kann die Auswurfeinheit einstellbar und/oder verstellbar sein. Die Steuereinheit kann über die Ventilanordnung oder eine weitere oder zweite Ventilanordnung mit dem weiteren Aktuator verbunden sein. Der weitere Aktuator kann beispielsweise in Form eines Hydraulikzylinders oder Pneumatikzylinders oder Hebekissens oder Gewindetriebs oder Zahnstangentriebs oder Elektrozylinders ausgebildet sein. Der Aktuator kann einen Endes, beispielsweise mit dem Kolben, mit der Auswurfeinheit und anderen Endes, beispielsweise mit oder dem Zylinder, an der Ballenpresse, beispielsweise am Ballenpressenrahmen, verbunden sein, insbesondere befestigt und/oder angelenkt sein. Ebenso kann der Aktuator auch umgekehrt befestigt oder angelenkt sein. Mit anderen Worten, die Kombination, insbesondere der weitere Aktuator, kann mit der Steuereinheit derart ansteuerbar sein, dass die Auswurfeinheit zwischen einer ersten Auswurfposition, in der die Presskammer geschlossen ist, insbesondere die Auswurfeinheit die Presskammer verschliesst, und einer zweiten Auswurfposition bewegbar ist, in der die Presskammer geöffnet ist, insbesondere die Auswurfeinheit die Presskammer nicht verschliesst, und der Ballen ausgeworfen werden kann, bevorzugt wenn der Entladewinkel und/oder die Entladeposition eingestellt ist. Der Ballen kann also ausgeworfen werden, wenn die Auswurfeinheit in der zweiten Auswurfposition ist und bevorzugt der Entladewinkel eingestellt ist und/oder die Kombination die Entladeposition erreicht hat. Das Ansteuern der Auswurfeinheit kann manuell erfolgen. Beispielsweise kann der Bediener per Knopfdruck mit der Ein- und Ausgabeeinheit das Auswurfsignal generieren, wenn der Entladewinkel eingestellt ist oder wenn die Kombination die Entladeposition erreicht hat und der Entladewinkel eingestellt ist. Das Auswurfsignal kann an die Steuereinheit gesendet werden und die Steuereinheit den weiteren Aktuator in Abhängigkeit von diesem Signal derart ansteuern, dass dieser Auswurfeinheit in die zweite Auswurfposition bewegt. Ebenso kann die Kombination aber auch automatisch entladen werden bzw. die Auswurfeinheit automatisch geöffnet werden, indem die Steuereinheit das Auswurfsignal generiert, wenn der Entladewinkel eingestellt ist oder wenn die Kombination die Entladeposition erreicht hat und der Entladewinkel eingestellt ist, und die Steuereinheit den weiteren Aktuator in Abhängigkeit vom Auswurfsignal derart ansteuert, dass die Auswurfeinheit in die zweite Auswurfposition bewegt wird. Vorteilhafterweise kann dadurch das Öffnen der Auswurfeinheit und das Entladen des Ballens manuell und/oder automatisch erfolgen.

In Ausgestaltung der Erfindung umfasst die Kombination, insbesondere das Zugfahrzeug, eine Ein- und Ausgabeeinheit. Die Steuereinheit ist mit der Ein- und Ausgabeeinheit verbunden, wobei mittels oder mit der Steuereinheit ein Bestätigungssignal generierbar ist, wenn der Entladewinkel eingestellt ist oder wenn die Kombination die Entladeposition erreicht hat und der Entladewinkel eingestellt ist. Das Bestätigungssignal ist von der Steuereinheit an die Ein- und Ausgabeeinheit sendbar und mit der Ein- und Ausgabeeinheit ausgebbar. Die Ein- und Ausgabeeinheit kann das Bestätigungssignal beispielsweise als Signalton oder visuell auf einem Bildschirm der Ein- und Ausgabeeinheit ausgeben. Dadurch kann vorteilhafterweise ein manueller Entlademodus umgesetzt werden.

Die Erfindung betrifft weiter ein Verfahren zum Betrieb bzw. Betreiben einer Kombination aus einem Zugfahrzeug und einer mittels einer Deichsel vom Zugfahrzeug gezogenen Ballenpresse, insbesondere einer Kombination nach mindestens einem der Ansprüche 1 bis 11. In Ausgestaltung der Erfindung wird ein Winkel zwischen der Deichsel und der Ballenpresse mit einem Aktuator eingestellt und/oder verstellt. Die Kombination wird mit dem Antriebssystem und/oder dem Aktuator von einer ersten Position, insbesondere einer aktuellen Position, in eine Entladeposition, insbesondere eine zweite Position, bewegt. Der Ballen wird an der Entladeposition entladen und die Kombination mit dem Antriebssystem und/oder dem Aktuator von der Entladeposition, insbesondere der zweiten Position, in die erste Position, insbesondere der aktuellen Position, zurückbewegt, insbesondere nachdem der Ballen entladen ist. Die Ballenpresse kann mit dem Aktuator gegenüber dem Zugfahrzeug in seitlicher Richtung gelenkt und/oder verschwenkt werden. Mit dem Aktuator kann, insbesondere in Abhängigkeit von einem Entladesignal, ein Entladewinkel zwischen der Deichsel, insbesondere der Längsmittelachse der Deichsel, und der Ballenpresse, insbesondere einer Längsmittelachse der Ballenpresse, eingestellt und/oder verstellt, sodass die Ballenpresse von der ersten Position in die Entladeposition bewegt wird. Der Entladewinkel und/oder die Entladeposition kann, insbesondere mit der Steuereinheit, bestimmt und/oder ermittelt, insbesondere erfasst und/oder berechnet werden. Die Entladeposition und/oder der Entladewinkel kann, insbesondere mit der Steuereinheit, zumindest teilweise oder aber vollständig in Abhängigkeit von einer Neigung an der Entladeposition bestimmbar sein. Die Neigung, insbesondere eine Neigung an der Entladeposition und/oder der Kombination kann in Form eines Neigungssignals erfasst und in Abhängigkeit vom Neigungssignal der Entladewinkel und/oder die Entladeposition bestimmt und/oder ermittelt werden. Die Kombination kann einen Neigungssensor umfassen, wobei mit dem Neigungssensor eine Neigung, insbesondere an der Entladeposition und/oder der Kombination, in Form eines Neigungssignals bestimmt und/oder ermittelt, insbesondere erfasst und/oder berechnet werden kann. In Abhängigkeit vom Neigungssignal kann, insbesondere mit der Steuereinheit, der Entladewinkel und/oder die Entladeposition bestimmt und/oder ermittelt, insbesondere erfasst und/oder berechnet werden. Ebenso kann die Position der Kombination in Form eines Positionssignals erfasst und in Abhängigkeit vom Positionssignal ein Entladewinkel und/oder eine Entladeposition bestimmt und/oder ermittelt, insbesondere erfasst und/oder berechnet werden. Die Kombination kann dazu eine GPS-Einrichtung umfassen, wobei mit der GPS-Einrichtung die Position der Kombination in Form eines Positionssignals erfasst und/oder ermittelt wird. Die Steuereinheit kann in Abhängigkeit vom Positionssignal den Entladewinkel und/oder die Entladeposition bestimmen und/oder ermitteln, insbesondere erfassen und/oder berechnen. Die Kombination kann auch eine Lenkeinrichtung und/oder ein Antriebssystem umfassen, wobei die Kombination, insbesondere das Zugfahrzeug, mit der Lenkeinrichtung und/oder dem Antriebssystem, insbesondere in Abhängigkeit vom Entladesignal, an die Entladeposition gesteuert oder gelenkt wird. Das Entladesignal kann generiert werden, bevor eine Pressphase abgeschlossen ist oder wenn die Pressphase abgeschlossen ist oder während oder bevor eine Wickelphase abgeschlossen ist oder wenn die Wickelphase abgeschlossen ist. Das Verfahren weist alle Vorteile der oben genannten erfindungsgemässen Kombination auf.

Der Aktuator und/oder der oder die weiteren Aktuatoren und/oder der Neigungssensor und/oder die GPS-Einrichtung und/oder die Lenkeinrichtung und/oder der Lenkaktuator und/oder die Ein- und Ausgabeeinheit und/oder die Erfassungseinrichtung und/oder das Bildverarbeitungssystem und/oder alle weiteren Sensoren, beispielsweise der oder die Ballensensoren, Wickelsensoren, Auswurfklappensensor und/oder Rückkopplungssensoren können mit der Steuereinheit betreibbar, bevorzugt ansteuerbar und/oder steuerbar und/oder regelbar, besonders bevorzugt einstellbar und/oder verstellbar sein. Die Kombination, insbesondere das Zugfahrzeug oder die Ballenpresse oder beide gemeinsam, kann bzw. können die Steuereinheit umfassen. Ebenso kann die Steuereinheit als Zugfahrzeugsteuereinheit und/oder Ballenpressensteuereinheit ausgebildet sein. Die Steuereinheit kann der Kombination, insbesondere dem Zugfahrzeug oder der Ballenpresse oder beiden gemeinsam, zugeordnet und/oder an oder in diesen angeordnet sein. Die Steuereinheit kann als ein elektronisches Modul, ein eingebettetes System, eine Recheneinheit, ein Computer, als ein Modul zum Steuern und/oder Regeln der Kombination, insbesondere des Zugfahrzeugs und/oder der Ballenpresse, ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung der Kombination erforderlich sind. Das Verfahren kann als Programm oder Algorithmus ausgebildet sein, welches auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb der Kombination und die erforderlichen Aufgaben zur Steuerung und/oder Regelung des Betriebs der Kombination zu steuern und/oder zu regeln und/oder auszuführen. Die Steuereinheit kann mit den Bauteilen der Kombination, also insbesondere dem Aktuator und/oder dem oder den weiteren Aktuatoren und/oder dem Neigungssensor und/oder der GPS-Einrichtung und/oder der Lenkeinrichtung und/oder der Lenkaktuator und/oder der Ein- und Ausgabeeinheit und/oder die Erfassungseinrichtung und/oder das Bildverarbeitungssystem und/oder allen weiteren Sensoren, beispielsweise der oder die Ballensensoren, Wickelsensoren, Auswurfklappensensor und/oder Rückkopplungssensoren, verbunden sein, bevorzugt signalverbunden und/oder signalübertragend und/oder datenleitend verbunden sein. Unter einer signalverbundenen und/oder signalübertragenden und/oder datenleitenden Verbindung kann dabei unter anderem verstanden werden, dass ein Austausch von Signalen bzw. Daten zwischen den verbundenen Bauteilen stattfindet. Signale können beispielsweise von der Steuereinheit empfangen und versendet werden und/oder verarbeitet und/oder bearbeitet werden. Die Verbindung zwischen der Steuereinheit und den Bauteilen der Kombination kann kabelgebunden, insbesondere also mit Kabel, und/oder kabellos, also per Funk, beispielsweise mit Bluetooth oder WLAN realisiert sein. Der Kommunikationsbus kann beispielsweise Isobus, CAN-Bus oder ähnliches sein kann. Ausserdem kann mit der Steuereinheit eine weitere Steuereinheit steuerbar und/oder regelbar und/oder ansteuerbar sein. Die weitere Steuereinheit kann wie die Steuereinheit ausgebildet sein. Die Steuereinheit kann dem Zugfahrzeug zugeordnet, insbesondere am Fahrzeug angeordnet sein. Die Steuereinheit kann auch zweiteilig beispielsweise als Teil des Fahrzeugs und als Teil der Ballenpresse ausgebildet sein. Die Steuereinheit kann unmittelbar mit der in einer Kabine des Fahrzeugs angeordneten Ein- und Ausgabeeinheit Verbindung stehen, durch welche von einer Bedienperson eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:

Fig. 1    eine schematische Darstellung eines ersten Ausführungsbeispiels einer erfindungsgemässen Kombination aus einem Zugfahrzeug und einer Ballenpresse, und

Fig. 2    eine schematische Darstellung des ersten Ausführungsbeispiels der erfindungsgemässen Kombination von oben, und

Fig. 3-5    eine schematische Darstellung von Teilen des ersten Ausführungsbeispiels der erfindungsgemässen Kombination, und

Fig. 6a    eine schematische Darstellung der erfindungsgemässen Kombination in der ersten Position, und

Fig. 6b    eine schematische Darstellung der erfindungsgemässen Kombination in der Entladeposition, und

Fig. 7    ein schematisches Flussdiagramm des Verfahrens zum Betreiben der Kombination.

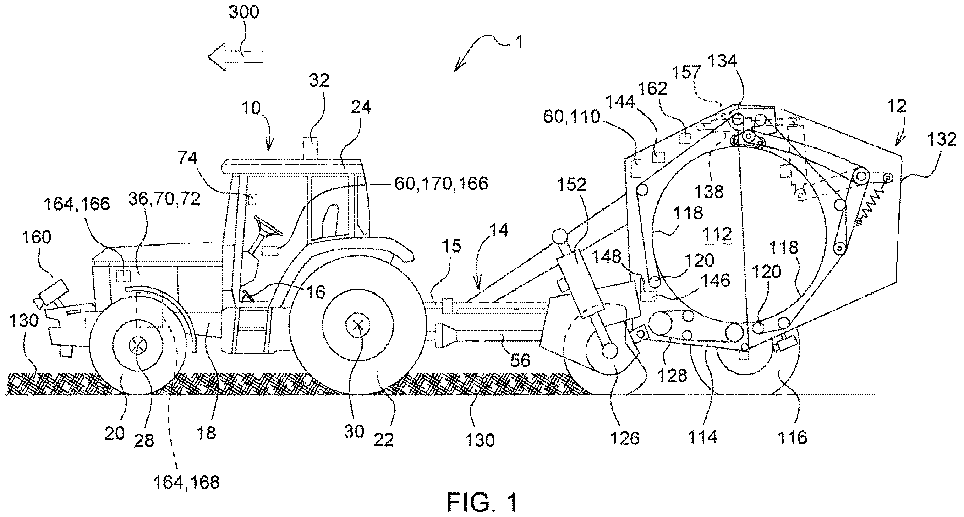

Figur 1 zeigt eine schematische Darstellung eines ersten Ausführungsbeispiels einer erfindungsgemässen Kombination 1 aus einem Zugfahrzeug 10 mit einem Antriebssystem 70 zum Antreiben der Kombination 1, insbesondere des Zugfahrzeugs 10, und einer mittels einer Deichsel 14 vom Zugfahrzeug 10 gezogenen Ballenpresse 12. Das Zugfahrzeug 10 umfasst das Antriebssystem 70. Das Zugfahrzeug 10, insbesondere das Antriebssystem 70, umfasst den Antriebsmotor 36, beispielsweise eine Verbrennungskraftmaschine oder einen Elektromotor. Das Zugfahrzeug 10, insbesondere das Antriebssystem 70, kann ausserdem eine Getriebeeinheit 72, insbesondere ein Getriebe, umfassen. Der Antriebsmotor 36 kann ausserdem mit einer Antriebswelle 56 der Ballenpresse 12 verbunden sein.

Die Kombination 1 umfasst eine Ein- und Ausgabeeinheit 74 und eine Steuereinheit 60, die vorliegend im Zugfahrzeug 10 angeordnet sind. Die Steuereinheit 60 kann aber auch verteilt am oder im Zugfahrzeug 10 und der Ballenpresse 12 angeordnet sein. Ebenso kann die Steuereinheit 60 als Zugfahrzeugsteuereinheit 170 und Ballenpressensteuereinheit 110 ausgebildet sein, wobei die Ballenpresse 12 die Ballenpressensteuereinheit 110 und das Zugfahrzeug 10 die Zugfahrzeugsteuereinheit 170 umfassen kann. Die Ballenpressensteuereinheit 110 und die Zugfahrzeugsteuereinheit 170 können jeweils einzeln als Steuereinheit 60 ausgebildet sein oder zusammen den Aufbau und alle Funktionalitäten und alle Verbindungen der Steuereinheit 60 aufweisen. Das Antriebssystem 70 und/oder seine Komponenten, beispielsweise der Antriebsmotor 36 und/oder die Getriebeeinheit 72, können mit der Steuereinheit 60 verbunden und/oder ansteuerbar, insbesondere einstellbar und/oder verstellbar sein. Die Steuereinheit 60 ist mit der Ein- und Ausgabeeinheit 74 verbunden, insbesondere signalverbunden. Mit der in einer Kabine 24 des Zugfahrzeugs angeordneten Ein- und Ausgabeeinheit 74 können von einem Bediener der Kombination 1 in die Ein- und Ausgabeeinheit 74 eingegebene Daten und/oder Befehle an die Steuereinheit 60 übertragen oder von dieser empfangen werden. Ebenso können Daten und/oder Befehle mit der Ein- und Ausgabeeinheit 74 und ausgegeben werden.

Das Zugfahrzeug 10 kann einen Zugfahrzeugrahmen 18 umfassen, insbesondere auf dem Zugfahrzeugrahmen 18 getragen sein. Der Zugfahrzeugrahmen 18 kann auf Bodeneingriffsmittel getragen sein. Die Bodeneingriffsmittel, hier in Form von Vorderrädern 20 und Hinterrädern 22 dargestellt, stehen mit einem Untergrund zur Übertragung von Antriebskräften in Eingriff und/oder das Zugfahrzeug 10 stützt sich mit diesen auf dem Untergrund oder Boden ab. Die Bodeneingriffsmittel, insbesondere die Vorderräder 20 und Hinterräder 22 können lenkbar und/oder beweglich sein. Die Kabine 24 kann vom Zugfahrzeugrahmen 18 getragen sein. Ausserdem kann sich in der Kabine 24 eine Arbeitsstation des Bedieners und/oder die Ein- und Ausgabeeinheit 74 befinden. Das Zugfahrzeug 10 umfasst eine Vorderachse 28 und eine Hinterachse 30. Die Hinterachse 30 kann, insbesondere permanent, und die Vorderachse 28 kann nicht oder bedarfsweise zuschaltbar, insbesondere permanent, vom Antriebssystem angetrieben werden. Die Vorderachse 28, und/oder insbesondere die Hinterachse 30 können mit einer Lenkeinrichtung 164, besonders bevorzugt mit einem Lenkaktuator 168, einstellbar und/oder verstellbar sein. Die Kombination 1, insbesondere das Zugfahrzeug 10, ist vom oder mit dem Antriebssystem 70, insbesondere dem Antriebsmotor 36, antreibbar. Der Antriebsmotor 36 kann dazu eine Drehzahl und/oder ein Drehmoment über die Getriebeeinheit 72 an die Vorder- und/oder Hinterachse 28, 30 und die Bodeneingriffsmittel übertragen, sodass die Kombination 1, insbesondere das Zugfahrzeug 10, angetrieben wird. Das Zugfahrzeugs 10 kann beispielsweise auch ein Gaspedal 16 oder einen nicht gezeigten Handgashebel umfassen. Im Folgenden beziehen sich Richtungsangaben wie vorne und hinten, links und rechts auf die Vorwärtsrichtung 300 des Zugfahrzeugs 10, die in Fig. 1 nach links geht.

Die Ballenpresse 12 ist mit dem Zugfahrzeug 10 verbunden, und/oder insbesondere gekoppelt. Das Zugfahrzeug 10 ist durch die oder mit der Deichsel 14 mit der Ballenpresse 12 verbunden. Beispielsweise kann die Ballenpresse 12 mit der Deichsel 14 an eine Anhängerkupplung 15 (engl. Hitch) des Zugfahrzeugs 10 gekoppelt sein. Das Zugfahrzeug 10 kann die Ballenpresse 12 ziehen. Die Ballenpresse 12 umfasst eine Aufnahmeeinheit 126 zur Aufnahme von Erntegut und eine Presskammer 112, um das aufgenommene Erntegut zu einem Ballen 210 zu formen bzw. zu pressen. Die Ballenpresse 12 kann einen Ballenpressenrahmen 114 umfassen. Der Ballenpressenrahmen 114 kann auf Rädern 116 getragen sein. Die Presskammer 112 kann am oder auf dem Ballenpressenrahmen 114 angeordnet, bevorzugt mit diesem verbunden und/oder an diesem befestigt und/oder getragen sein. Die Ballenpresse 12 ist mit einer grössenveränderlichen Presskammer 112 bzw. als Ballenpresse 12 mit variabler Presskammer 112 ausgebildet. Das Pressmittel 118 ist als Band oder Riemen ausgebildet. Das Pressmittel 118 umgibt die Presskammer 112 und ist mit Rollen 120 geführt. Die Ballenpresse 12 kann aber auch eine grössenunveränderliche Presskammer umfassen. Hierbei kann das Pressmittel 112 als eine oder mehrere Pressrollen ausgebildet sein, insbesondere eine Vielzahl zueinander parallel verlaufender Pressrollen zum Pressen des Ernteguts.

Die Aufnahmeeinheit 126, insbesondere in Form einer Pick-up, ist an der Ballenpresse 12 angeordnet und/oder mit dieser verbunden, insbesondere unterhalb der Vorderkante der Ballenpresse 12. Die Aufnahmeeinheit 126 kann sich um eine Querachse bewegenden oder drehenden Zinken umfassen. Der Aufnahmeeinheit 126 kann in einer Erntegutflussrichtung eine Fördereinheit, vorliegend ein Förderband 128, der Ballenpresse 12 folgen. Das Förderband 128 könnte auch durch einen Rotor (nicht gezeigt) ersetzt werden, oder ein Rotor könnte in Gutflussrichtung zwischen der Aufnahmeeinheit 126 und dem Förderband 128 eingefügt werden. Anstelle der Aufnahmeeinheit 126, insbesondere der Pick-up, könnten auch andere geeignete Erntegutaufnahmemittel wie Mäh- und Fördereinheiten verwendet werden. Die Aufnahmeeinheit 126 sammelt Erntegut, das in einer Schwade 130 beispielsweise aus Gras, Heu oder Stroh, auf dem Feld liegt, und führt es der Presskammer 112 zu. Die Pressmittel 118, insbesondere eines oder mehrere Bänder oder Gurte, können während eines Ballenpressvorgangs in ihrer Längsrichtung in Bewegung versetzt werden, indem eine oder mehrere der Rollen 120 rotierend angetrieben werden. Das in die Presskammer 112 eingeführte Erntegut dreht sich somit auch während des Pressens. Während des Pressenvorgangs nimmt die Größe der Presskammer 112 mit der Zeit zu.

Die Ballenpresse 12 kann eine Auswurfeinheit 132, beispielsweise eine Auswurfklappe oder ein Heckteil oder eine Heckklappe der Ballenpresse, umfassen. Die Auswurfeinheit 132 kann schwenkbar an der Ballenpresse 12, insbesondere dem Ballenpressenrahmen 114 oder einem Gehäuseteil, angeordnet, bevorzugt mit diesem verbunden und/oder an diesem befestigt und/oder getragen sein. Die Auswurfeinheit 132 kann um eine Achse 134 schwenkbar sein, die sich quer zur Vorwärtsrichtung des Zugfahrzeugs 10 und/oder der Längsmittelachse der Ballenpresse 12 erstreckt.

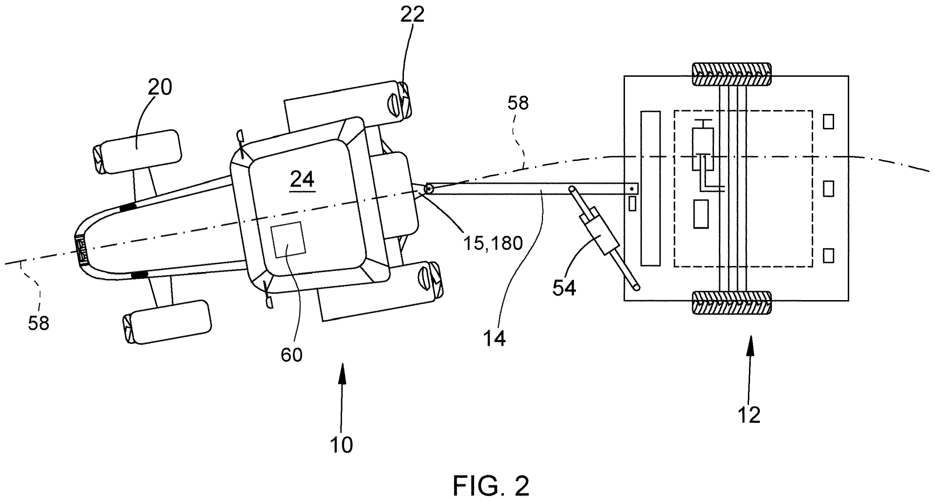

Die Steuereinheit 60 ist mit einem Aktuator 54 (siehe Figur 2) verbunden. Die Steuereinheit 60 kann insbesondere über eine Ventilanordnung 180 (siehe Figur 2), insbesondere eine erste Ventilanordnung, beispielsweise über eine elektromagnetische oder eine hydraulische Ventilanordnung, mit dem Aktuator 54 verbunden sein. Der Aktuator 54 ist zum Verstellen und/oder zum Einstellen eines Winkels zwischen der Deichsel 14 und der Ballenpresse 12 ausgebildet. Dadurch kann die Ballenpresse 12 mit dem Aktuator 54 gegenüber dem Zugfahrzeug 10 in seitlicher Richtung lenkbar sein. Wesentlich für die erfindungsgemässe Kombination 1 ist, dass die Steuereinheit 60 betreibbar ist das Antriebssystem 70 und/oder den Aktuator 54 derart anzusteuern, dass die Kombination 1 von einer ersten Position P1 in eine Entladeposition P2 bewegt wird oder bewegbar ist, und die Ballenpresse 12 derart anzusteuern, dass der Ballen 210 an der Entladeposition P2 entladen wird, und das Antriebssystem 70 und/oder den Aktuator 54 derart anzusteuern, dass die Kombination 1 von der Entladeposition P2 in die erste Position P1 zurück bewegt wird, insbesondere, wenn der Ballen 210 entladen ist. Die Steuereinheit 60 kann betreibbar sein, einen Entladewinkel EW und/oder die Entladeposition P2 zu bestimmen.

Ein weiterer oder zweiter Aktuator 138 in Form eines Hydraulikzylinders kann mit einem Ende mit dem Ballenpressenrahmen 114 und mit einem zweiten Ende mit der Auswurfeinheit 132 verbunden, insbesondere an dieser befestigt und/oder montiert sein. Der weitere Aktuator 138 kann mit der Auswurfeinheit 132 derart verbunden sein, dass er die Auswurfeinheit 132 um die Achse 134 nach oben (in Fig. 1 gegen den Uhrzeigersinn) schwenken kann, um den Ballen 210 aus der Presskammer 112 auswerfen zu können. Die Auswurfeinheit 132 kann also mit dem weiteren Aktuator 138 geöffnet oder geschlossen bzw. angehoben und abgesenkt werden. Der weitere Aktuator 138 kann mit der Steuereinheit 60 oder der Ballenpressensteuereinheit 110 mit oder über die Ventilanordnung 180 oder eine weitere oder zweite Ventilanordnung (nicht gezeigt), beispielsweise über eine elektromagnetische oder eine hydraulische Ventilanordnung, eingestellt und/oder verstellt, insbesondere gesteuert und geregelt werden. Die weitere Ventilanordnung kann dabei mit der Steuereinheit 60 oder der Ballenpressensteuereinheit 110 eingestellt und/oder verstellt, insbesondere gesteuert und geregelt werden. Ein Auswurfklappensensor 157 kann beispielsweise die Position des weiteren Aktuators 138 oder der Auswurfeinheit 132 erfassen.

Die Auswurfeinheit 132 kann mit der Steuereinheit 60 derart ansteuerbar sein, dass der Ballen 210 ausgeworfen wird, wenn der Entladewinkel EW und/oder die Entladeposition P2 eingestellt ist, insbesondere die Kombination 1 die Entladeposition P2 erreicht hat und/oder der Entladewinkel EW eingestellt ist. Ausserdem kann mittels oder mit der Steuereinheit 60 ein Bestätigungssignal generierbar sein, wenn der Entladewinkel EW eingestellt ist und/oder die Kombination 1 die Entladeposition P2 erreicht hat. Das Bestätigungssignal kann von der Steuereinheit 60 an die Ein- und Ausgabeeinheit 74 sendbar und mit der Ein- und Ausgabeeinheit 74 ausgebbar sein. Ebenso kann mittels oder mit der Ein- und Ausgabeeinheit 74, ein Auswurfsignal generierbar und an die Steuereinheit 60 sendbar sein. Die Steuereinheit 60 kann dann in Abhängigkeit vom Auswurfsignal die Auswurfeinheit 132 derart ansteuern, dass die Presskammer 112 geöffnet und der Ballen 210 ausgeworfen wird, wenn die Entladeposition P2 und/oder der Entladewinkel EW eingestellt ist, insbesondere die Kombination 1 die Entladeposition P2 erreicht hat und/oder der Entladewinkel EW eingestellt ist.

Die Ballenpresse 12 kann einen Ballensensor 144 umfassen, um die Grösse des Ballens in der Presskammer 112 zu erfassen bzw. mit dem eine Grösse eines Ballens erfasst wird. Die Steuereinheit 60 oder die Ballenpressensteuereinheit 110 kann mit dem Ballensensor 144 verbunden, bevorzugt signalverbunden und/oder signalübertragend und/oder datenleitend verbunden sein. Die Steuereinheit 60 oder die Ballenpressensteuereinheit 110 kann mit dem Ballensensor 144 beispielsweise mittels eines Kabels, insbesondere mit einem lösbaren Stecker, oder über eine Funkverbindung verbunden sein. Der Ballensensor 144 kann an oder in der Presskammer 112 angeordnet sein, insbesondere in dieser befestigt. Der Ballensensor 144 kann beispielsweise den Abstand zur Ballenoberfläche bzw. zu dem an der Ballenoberfläche anliegendem Pressmittel 118 erfassen und so Auskunft über die Grösse des Ballens geben, insbesondere den Radius und/oder den Ballendurchmesser. Die von den Ballensensor 144 erfasste Grösse des Ballens oder die Ballenform kann dem Bediener auf der Ein- und Ausgabeeinheit 74 angezeigt werden.

Die Ballenpresse 12 kann eine Wickeleinrichtung 146 umfassen. Die Wickeleinrichtung 146 kann an, insbesondere in der Nähe, der Presskammer 112 angeordnet sein. Die Wickeleinrichtung 146 kann mit der Steuereinheit 60 oder der Ballenpressensteuereinheit 110 verbunden sein und, sobald diese von der Steuereinheit 60 oder der Ballenpressensteuereinheit 110 dazu angewiesen wird, ein Wickelmaterial wie Garn, Band, Netz oder Verpackungsbogen an die Presskammer 112 abgeben. Der rotierende Ballen 210 kann an dem Wickelmaterial ziehen oder dieses einfangen, so dass es dann um den Ballen 210 gewickelt wird. Ein Wickelsensor 148 kann mit der Wickeleinrichtung 146 interagieren und erfassen, ob beispielsweise der Ballen 210 am Wickelmaterial zieht und/oder der Wickelvorgang abgeschlossen ist und/oder den Status des Wickelvorgangs bestimmen.

Die Aufnahmeeinheit 126 kann beispielsweise mit einem weiteren oder dritten Aktuator 152, hier in Form eines Hydraulikzylinders, angehoben und abgesenkt werden. Der weitere Aktuator 152 kann mit der Steuereinheit 60 oder der Ballenpressensteuereinheit 110, beispielsweise über die Ventilanordnung 180 oder eine weitere oder dritte Ventilanordnung (nicht dargestellt), eingestellt und/oder verstellt, insbesondere gesteuert und geregelt werden. Die weitere Ventilanordnung kann beispielsweise eine hydraulische oder elektromagnetische Ventilanordnung sein. Die weitere Ventilanordnung kann mit der Steuereinheit 60 oder der Ballenpressensteuereinheit 110 eingestellt und/oder verstellt, insbesondere gesteuert und geregelt werden.

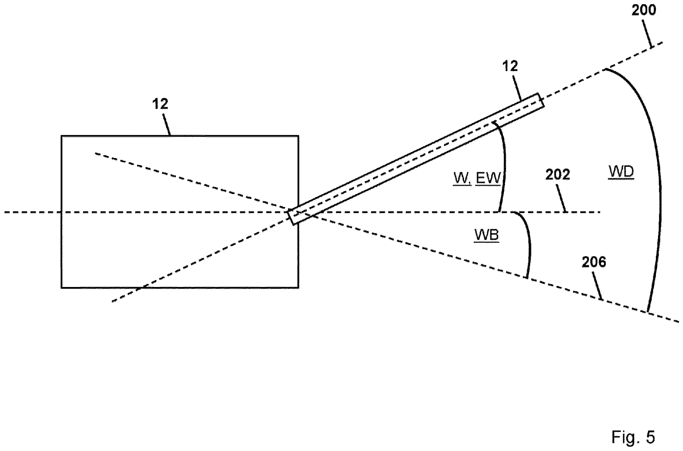

Die Kombination 1, bevorzugt das Zugfahrzeug 10, kann eine Erfassungseinrichtung 160, hier als eine Kamera ausgebildet, umfassen. Die Erfassungseinrichtung 160 kann, wie gezeigt, an die Vorderseite des Zugfahrzeugs 10, montiert sein. Die Erfassungseinrichtung 160 ist auf die Schwade 130 gerichtet. Die Erfassungseinrichtung 160 bzw. die Kamera liefert ein Erfassungssignal bzw. ein Videosignal an die Steuereinheit 60 oder ein Bildverarbeitungssystem (nicht gezeigt). Das Erfassungssignal bzw. Videosignal kann im Bildverarbeitungssystem verarbeitet werden. Das Bildverarbeitungssystem kann insbesondere als Teil der Steuereinheit 60 ausgebildet sein, um eine elektronische Angabe über die Position des Zugfahrzeugs 10 in Bezug auf die Schwade 130 bereitzustellen. Das Bildverarbeitungssystem kann ausserdem eine Solllinie des Schwads 130, insbesondere eine Längsmittelachse des Schwads 206 (siehe Figur 5) bestimmen. Ebenso kann das Bildverarbeitungssystem ein Lenksignal an eine Lenksteuerung 166 der Kombination 1 und/oder die Steuereinheit 60 senden bzw. die Steuereinheit 60 und/oder die Lenksteuerung können das Lenksignal empfangen. Das Lenksignal kann aber auch von der Steuereinheit 60 mit oder in Abhängigkeit vom Erfassungssignal oder der Solllinie des Schwads erzeugt oder generiert werden. Die Steuereinheit 60 kann die Lenksteuerung 166 umfassen bzw. die Lenksteuerung 166 kann als Teil der Steuereinheit 60 ausgebildet sein, also in die Steuereinheit 60 integriert sein.

Die Entladeposition P2 kann, zumindest teilweise, in Abhängigkeit von einer Neigung an der Entladeposition P2 und/oder der Neigung der Kombination 1 bestimmbar sein. Im Speziellen kann die Steuereinheit 60 derart betreibbar sein, dass die Entladeposition P2, zumindest teilweise, in Abhängigkeit von der Neigung an der Entladeposition P2 und/oder der Neigung der Kombination 1 bestimmbar ist. Die Kombination 1, insbesondere die Ballenpresse 12, umfasst einen Neigungssensor 162 zur Erfassung der Neigung der Kombination 1 in Form eines Neigungssignals. Die Steuereinheit 60 ist mit dem Neigungssensor 162 verbunden und empfängt das Neigungssignal des Neigungssensor 162. Die Steuereinheit 60 ist derart betreibbar, dass mit der Steuereinheit 60 in Abhängigkeit vom Neigungssignal der Entladewinkel EW und/oder die Entladeposition P2 bestimmbar und/oder ermittelbar ist, insbesondere derart, dass die Neigung ausgeglichen werden kann.

Die Kombination 1, insbesondere das Zugfahrzeug 10, kann auch eine GPS-Einrichtung 32 zur Bestimmung der Position der Kombination 1 in Form eines Positionssignals umfassen. Die Steuereinheit 60 ist mit der GPS-Einrichtung 32 verbunden. Die Steuereinheit 60 empfängt das Positionssignal von der GPS-Einrichtung 32. Die Steuereinheit 60 ist derart betreibbar, dass mit der Steuereinheit 60 in Abhängigkeit vom Positionssignal der Entladewinkel EW und/oder die Entladeposition P2 bestimmbar und/oder ermittelbar ist. Mit der GPS-Einrichtung 32 könne also Positionsdaten versendbar und/oder empfangbar sein, und/oder insbesondere berechenbar sein. Die GPS-Einrichtung 32 kann beispielsweise einen Positionsdaten empfangende GPS-Antenne und einen Speicher umfassen. Im Speicher kann die Position des Schwads 130 gespeichert sein, die aus früheren Arbeitsgängen bekannt ist. Die Kombination 1, insbesondere das Zugfahrzeug 10, kann dann so gelenkt werden, dass die Position der Kombination 1 oder des Zugfahrzeugs 10, die von der GPS-Einrichtung 32 bereitgestellt werden, und die Position des Schwads 130 aus dem Speicher übereinstimmen. Lenkdaten könnten auch durch die Steuereinheit 60 und/oder durch die Lenksteuerung 166 bestimmt und/oder ermittelt, und/oder berechnet werden.

Die Kombination 1, insbesondere das Zugfahrzeug 10, umfasst die Lenkeinrichtung 164. Die Lenksteuerung 166 und/oder die Steuereinheit 60 sind mit der Lenkeinrichtung 164 verbunden, insbesondere über eine weitere oder vierte Ventilanordnung mit der Lenkeinrichtung 164, bevorzugt dem Lenkaktuator 168, verbunden. Die Lenkeinrichtung 164 ist mit der Steuereinheit 60 und/oder der Lenksteuerung 166, insbesondere in Abhängigkeit vom Entladesignal und/oder Lenksignal, derart ansteuerbar, insbesondere einstellbar und/oder verstellbar, dass die Kombination 1, insbesondere das Zugfahrzeug 10, mit der Lenkeinrichtung 164 lenkbar ist, insbesondere an die Entladeposition P2 lenkbar ist. Im Speziellen kann die Lenkeinrichtung 164, insbesondere der Lenkaktuator 168, mit der Lenksteuerung 166 und/oder der Steuereinheit 60 die Bodeneingriffsmittel, insbesondere die lenkbaren Vorderräder 20 des Zugfahrzeugs, und/oder die Vorder- und/oder Hinterachse 28, 30 derart ansteuerbar, insbesondere einstellbar und/oder verstellbar sein, dass die Kombination 1, insbesondere das Zugfahrzeug 10 und, mit der Lenkeinrichtung 164, insbesondere in Abhängigkeit vom Lenksignal und/oder Entladesignal, lenkbar ist, insbesondere von der ersten Position P1 in die Entladeposition P2 und zurück lenkbar ist. Das Antriebssystem 70 ist mit der Lenksteuerung 166 und/oder der Steuereinheit 60, insbesondere in Abhängigkeit vom Entladesignal und/oder Lenksignal, derart ansteuerbar, insbesondere einstellbar und/oder verstellbar, dass die Kombination, insbesondere das Zugfahrzeug 10, mit dem Antriebssystem 70 bewegbar oder fahrbar ist, insbesondere von der ersten Position P1 in die Entladeposition P2 und zurück bewegbar oder fahrbar ist. Die Lenksteuerung 166 und/oder die Steuereinheit 60 kann mit der Lenkeinrichtung 164, bevorzugt mit dem Lenkaktuator 168, die Bodeneingriffsmittel, insbesondere die Vorderräder und/oder Hinterräder 20, 22, und/oder die Vorder- und/oder Hinterachse 28, 30 derart ansteuern, insbesondere einstellen und/oder verstellen, dass die Kombination 1, bevorzugt das Zugfahrzeug 10, besonders bevorzugt die Längsmittelachse 58 des Zugfahrzeugs 10, in Abhängigkeit vom Lenksignal, zumindest näherungsweise auf der Solllinie des Schwads 130, insbesondere der Längsmittelachse des Schwads 206 (siehe Figur 5), geführt wird. Ausserdem kann die Lenksteuerung 166 und/oder die Steuereinheit 60 das Antriebssystem 70 derart ansteuern, insbesondere einstellen und/oder verstellen, dass das Zugfahrzeug 10, insbesondere die Längsmittelachse 58 des Zugfahrzeugs 10, in Abhängigkeit vom Lenksignal, zumindest näherungsweise auf der Solllinie des Schwads 130, insbesondere der Längsmittelachse des Schwads 206 (siehe Figur 5), bewegt wird.

Das Entladesignal kann mit der Ein- und Ausgabeeinheit 74 das Entladesignal generierbar und an die Steuereinheit 60 sendbar oder übermittelbar sein. Ebenso kann Entladesignal aber auch mit der Steuereinheit 60 generierbar sein, bevor eine Pressphase abgeschlossen ist oder wenn die Pressphase abgeschlossen ist oder während oder bevor eine Wickelphase abgeschlossen ist, oder wenn die Wickelphase abgeschlossen ist.

Figur 2 zeigt eine schematische Darstellung des ersten Ausführungsbeispiels der erfindungsgemässen Kombination 1 in einer Ansicht von oben. Die in Figur 2 gezeigte Kombination 1 entspricht im Wesentlichen der in Figur 1 gezeigten Kombination 1, sodass im Folgenden lediglich auf Details und/oder Unterschiede eingegangen wird. Die in Figur 2 gezeigte Kombination 1 umfasst den Aktuator 54, der mit der Steuereinheit 60 verbunden ist. Der Aktuator 54 und die Ballenpresse 12 können mit der Steuereinheit 60, insbesondere in Abhängigkeit von einem Entladesignal, derart ansteuerbar sein, dass die Kombination 1, insbesondere die Ballenpresse 12, von der ersten Position P1 in die Entladeposition P2 bewegt, die Ballenpresse entladen und von der Entladeposition P2 in die erste Position P1 zurückbewegt wird. Im Speziellen kann der Aktuator 54 mit der Steuereinheit 60, insbesondere in Abhängigkeit von einem Entladesignal, derart ansteuerbar sein, dass der Entladewinkel EW zwischen der Deichsel 14 und der Ballenpresse 12 einstellbar ist, sodass der Ballen 210 an der Entladeposition P2, insbesondere in die vorgegebene Richtung und/oder unter dem Entladewinkel EW, aus der Ballenpresse 12 auswerfbar ist. Dadurch kann der Ballen 210, insbesondere der fertig geformte oder fertig umwickelte Ballen, an der Entladeposition P2 entladen und die Ballenpresse 12 in die erste Position P1 zurückbewegt werden.

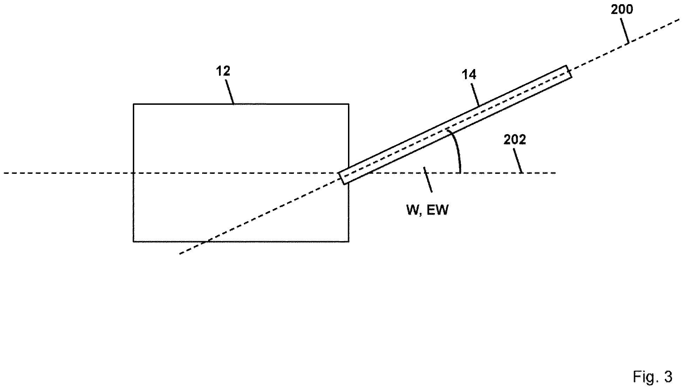

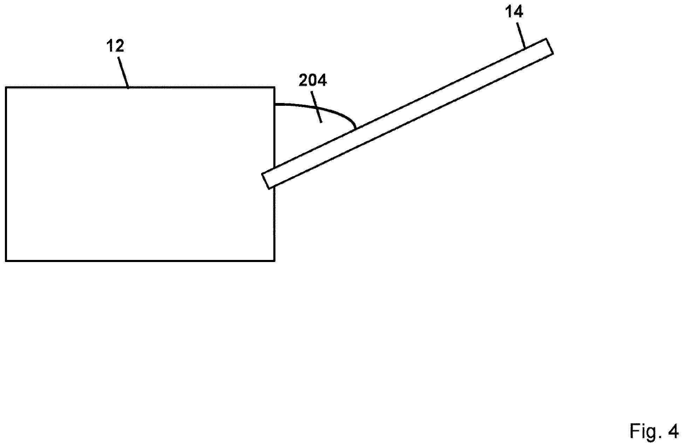

Figuren 3 bis 5 zeigen schematische Darstellungen des ersten Ausführungsbeispiels der erfindungsgemässen Kombination 1, insbesondere die Winkel zwischen Deichsel 14 und Ballenpresse 12. Die in den Figuren 3 bis 5 gezeigte Kombination 1 entspricht im Wesentlichen der in den Figuren 1 und 2 gezeigten Kombination 1, sodass im Folgenden lediglich auf Details und/oder Unterschiede eingegangen wird. Der Winkel W bzw. der Entladewinkel EW zwischen der Deichsel und der Ballenpresse 12, kann als Winkel W oder Entladewinkel EW zwischen der Längsmittelachse 200 der Deichsel 14 und der Längsmittelachse 202 der Ballenpresse 10 ermittelt oder bestimmt werden. Gemäss Figur 4 kann aber mit dem Winkel W bzw. dem Entladewinkel EW der direkte Winkel 204 zwischen Ballenpresse 12 und der Deichsel 14 wie folgt ermittelt werden:

$$Winkel_{204} = \left| 90^{\circ} - (W \; oder \; EW) \right|$$

Wie Figur 5 zeigt, kann der Winkel W oder der Entladewinkel EW aber auch in Abhängigkeit von einer Solllinie des Schwads 130 ermittelt und im Anschluss eingestellt und/oder verstellt werden. Die Solllinie des Schwads entspricht dabei der Längsmittelachse 206 des Schwads 130. Der Winkel W bzw. der Entladewinkel EW ergibt sich dann aus der Differenz der Winkel WB zwischen der Längsmittelachse 202 der Ballenpresse 12 und Längsmittelachse 206 des Schwads 130 und zwischen der Längsmittelachse 200 der Deichsel 14 und der Längsmittelachse 206 des Schwads 130. Also wie folgt:

$$EW = \left| WB - WD \right|$$

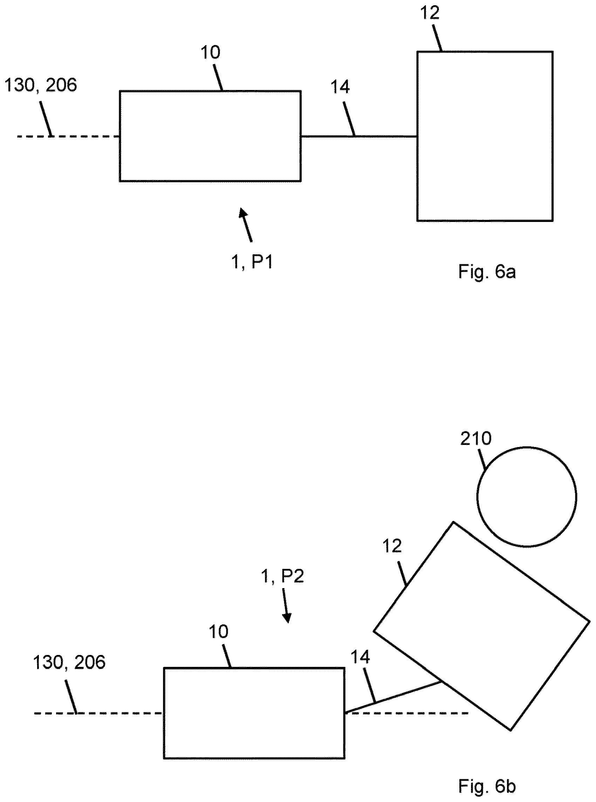

Figur 6a und 6b zeigen schematische Darstellungen des ersten Ausführungsbeispiels der erfindungsgemässen Kombination 1 in einer Ansicht von oben. Die in den Figuren 6a und 6b gezeigte Kombination 1 entspricht im Wesentlichen der in den Figuren 1 bis 5 gezeigten Kombination 1, sodass im Folgenden lediglich auf Details und/oder Unterschiede eingegangen wird. Figur 6a zeigt die Kombination 1 in der ersten Position P1. Figur 6b zeigt die Kombination 1 in der Entladeposition P2, insbesondere nachdem der Ballen 210 aus der Ballenpresse 12 entladen wurde. Wesentlich für die erfindungsgemässe Kombination 1 ist, dass das Antriebssystem 70 und/oder der Aktuator 54 mit der Steuereinheit 60 derart ansteuerbar ist, dass die Kombination 1 von einer ersten Position P1 in die Entladeposition P2 bewegt wird. Befindet sich die Kombination 1 in der Entladeposition P2, ist die Ballenpresse 12, insbesondere die Auswurfeinheit 132, mit der Steuereinheit 60 derart ansteuerbar, dass der Ballen 210 an der Entladeposition P2 entladen wird. Ist der Ballen 210 entladen, ist das Antriebssystem 70 und/oder der Aktuator 54 mit der Steuereinheit 60 derart ansteuerbar, dass die Kombination 1 von der Entladeposition P2 in die erste Position P1 zurückbewegt wird.

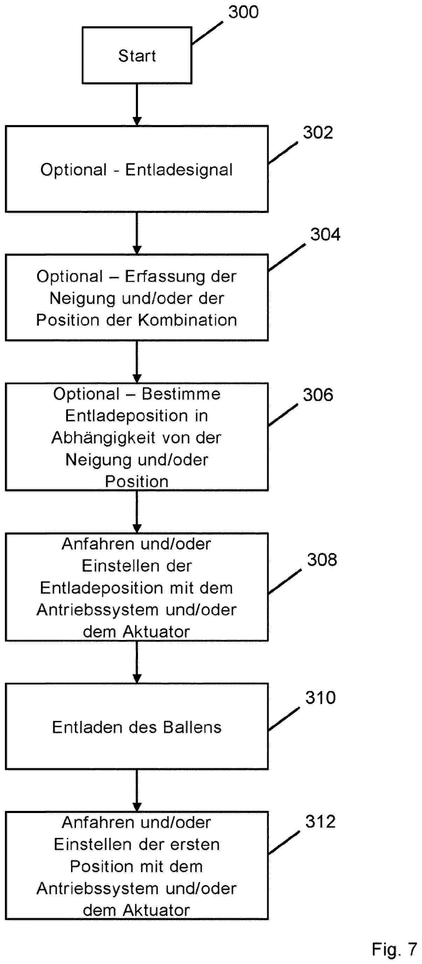

Figur 7 zeigt ein schematisches Flussdiagramm des erfindungsgemässen Verfahrens, nach dem insbesondere die Steuereinheit 60 arbeitet. Die in Figur 7 gezeigte Arbeitsweise ist mit den in den Figuren 1 bis 6 gezeigten Kombinationen 1 durchführbar. Nach dem Start im Schritt 300 folgt der optionale Schritt 302, in dem ein Entladesignal generiert werden kann. Das Entladesignal kann mit der Ein- und Ausgabeeinheit 74 oder der Steuereinheit 60 generiert werden. Das Entladesignal kann von der Ein- und Ausgabeeinheit 74 beispielsweise per Knopfdruck oder Sprachbefehl generiert werden. Dann wird das Entladesignal von der Ein- und Ausgabeeinheit 74 an die Steuereinheit 60 übermittelt, insbesondere gesendet. Alternativ wird das Entladesignal mit der Steuereinheit 60 generiert, bevor die Pressphase abgeschlossen ist oder wenn die Pressphase abgeschlossen ist oder während oder bevor eine Wickelphase abgeschlossen ist, oder wenn die Wickelphase abgeschlossen ist. Im folgenden Schritt 304 wird optional eine Neigung an der Entladeposition P2 und/oder eine Neigung der Kombination 1 erfasst und/oder bestimmt. Die Neigung der Kombination 1 kann dabei mit dem Neigungssensor 162 in Form des Neigungssignals erfasst werden, insbesondere gemessen werden. Ebenso kann in Schritt 304 optional eine Position der Kombination 1, insbesondere des Zugfahrzeugs und/oder der Ballenpresse, erfasst und/oder bestimmt werden. Die Position der Kombination 1 kann dabei mit der GPS-Einrichtung 32 in Form des Positionssignals erfasst und/oder bestimmt werden. erfasst, insbesondere gemessen werden. In Schritt 306 wird optional in Abhängigkeit von oder mit dem Neigungssignal bzw. der Neigung der Entladewinkel EW und/oder die Entladeposition P2 bestimmt und/oder ermittelt, insbesondere berechnet. Ebenso wird optional in Abhängigkeit von oder mit dem Positionssignal bzw. der Position der Entladewinkel EW und/oder die Entladeposition P2 bestimmt und/oder ermittelt, insbesondere berechnet. Die Entladeposition P2 und/oder der Entladewinkel EW können entweder in Abhängigkeit von der Neigung bzw. dem Neigungssignal und/oder der Position bzw. dem Positionssignal ermittelt werden oder aber auch beispielsweise von einem Bediener der Kombination 1 vorgegeben werden. Im Speziellen kann der vorgegebene Entladewinkel EW ein vorgegebener Winkel zur Solllinie des Schwads sein, unter welchem der Ballen 210 abgelegt werden soll. Falls die Entladeposition P2 und/oder der Entladewinkel EW vorgegeben wird, kann der Bediener vor Schritt 300 die Entladeposition P2 und/oder den Entladewinkel EW beispielsweise in die Ein- und Ausgabeeinheit 74 eingeben, beispielsweise per Knopfdruck oder Sprachbefehl. Die Entladeposition P2 und/oder der Entladewinkel EW können im Anschluss von der Ein- und Ausgabeeinheit 74 an die Steuereinheit 60 übermittelt, insbesondere gesendet werden. Die Entladeposition P2 und/oder der Entladewinkel EW können, falls einer oder mehrere der Schritte 304 bis 306 durchgeführt werden, beispielsweise derart ermittelt werden, dass die Neigung der Kombination 1, insbesondere des Zugfahrzeugs 10 und/oder der Ballenpresse 12, im Speziellen die Seitenneigung des Erdbodens oder eine Hangneigung, ausgeglichen wird, sodass der Ballen 210 nicht wegrollt oder einen Hang herunterrollt. Zusätzlich oder alternativ können die Entladeposition P2 und/oder der Entladewinkel EW beispielsweise derart ermittelt werden, dass die Neigung an der Entladeposition P2 minimal ist, sodass der Ballen 210 beispielsweise nicht wegrollt oder den Hang hinunterrollt. Die Entladeposition P2 und/oder der Entladewinkel EW kann aber auch derart ermittelt oder vorgegeben werden, dass der vorgegebene Winkel zu einer Solllinie des Schwads eingehalten wird. Die Steuereinheit 60 kann dann die Entladeposition P2 und/oder den Entladewinkel EW einstellen und/oder verstellen. Die Entladeposition P2 kann, falls einer oder mehrere der Schritte 304 bis 306 durchgeführt werden, derart ermittelt werden, dass die Entladeposition P2 der Kombination 1, insbesondere des Zugfahrzeugs 10 und/oder der Ballenpresse 12, beispielweise nicht an einem Hang oder parallel zum Hang ist, sodass der Ballen 210 nicht den Hang herunterrollt, und/oder eine Entladeposition P2 vorgegebene werden, sodass beispielsweise der Ballen 210 optimal eingesammelt werden kann. Die Entladeposition P2 und/oder der Entladewinkel EW können auch vorgegeben werden oder insbesondere auch zu einer Solllinie des Schwads vorgegeben werden.

Gemäss Schritt 308 kann die Kombination 1, insbesondere in Abhängigkeit vom Entladesignal, von der ersten Position P1 an die Entladeposition P2 bewegt und/oder gelenkt werden. Dazu kann die Kombination 1 die Lenkeinrichtung 164 und/oder das Antriebssystem 70 umfassen. Die Lenkeinrichtung 164 und/oder das Antriebssystem 70 sind dabei mit der Steuereinheit 60, insbesondere in Abhängigkeit vom Entladesignal, derart ansteuerbar, dass die Kombination 1, insbesondere das Zugfahrzeug 10, mit der Lenkeinrichtung 164 und/oder dem Antriebssystem 70 an die Entladeposition P2 bewegt und/oder gelenkt werden. Zusätzlich oder alternativ kann der Entladewinkel EW zwischen der Deichsel 14

und der Ballenpresse 12 eingestellt werden, sodass die Kombination 1, insbesondere die Ballenpresse, von der ersten Position P1 in die Entladeposition P2 bewegt wird. Dazu kann mit dem Aktuator 54, insbesondere in Abhängigkeit vom Entladesignal, zum Entladen des Ballens aus der Ballenpresse 12 an der Entladeposition P2, der Entladewinkel EW eingestellt werden. Der Entladewinkel EW kann, wie in den Figuren 3 bis 5 beschrieben, bestimmt und eingestellt und/oder verstellt werden. Dazu können die Signale für die Ventilanordnung 180 bestimmt und übersendet werden und der Aktuator eingestellt und/oder verstellt werden. Beispielsweise kann die Kombination 1, um die Neigung auszugleichen, Hang ab- oder Hang aufwärts fahren oder, um die Kombination 1 vor dem Auswerfen eines Ballens parallel zum Hang zu stellen und so zu verhindern, dass er den Hang hinunterrollt. Ebenso kann die Kombination 1 oder die Ballenpresse 12 zum Schwad 130 ausgerichtet werden. In Schritt 310 wird der Ballen 210 aus der Ballenpresse entladen. Der Ballen 210 wird an der Entladeposition P2, und kann insbesondere unter dem Entladewinkel EW aus der Ballenpresse 12 ausgeworfen. Die Auswurfeinheit 132 der Ballenpresse 12 wird geöffnet und der Ballen 210 ausgeworfen, wenn die Kombination 1 die Entladeposition P2 erreicht hat und/oder der Entladewinkel EW eingestellt ist. Dazu kann insbesondere die Auswurfeinheit 132 mit der Steuereinheit 60 angesteuert, insbesondere geöffnet oder in die zweite Auswurfposition bewegt werden. In Schritt 312 wird, nachdem der Ballen 210 entladen wurde, die die Kombination 1 von der Entladeposition P2 in die erste Position P1 zurückbewegt und/oder gelenkt. Die Lenkeinrichtung 164 und/oder das Antriebssystem 70 und/oder der Aktuator 54 sind dabei mit der Steuereinheit 60 derart ansteuerbar, dass die Kombination 1 mit der Lenkeinrichtung 164 und/oder dem Antriebssystem 70 und/oder dem Aktuator in die erste Position P1 bewegt und/oder gelenkt wird.

**Patentansprüche**

1.  Kombination aus einem Zugfahrzeug (10) mit einem Antriebssystem (70) und einer mittels einer Deichsel (14) vom Zugfahrzeug (10) gezogenen Ballenpresse (12),

    mit einer Steuereinheit (60), wobei die Steuereinheit (60) mit dem Antriebssystem (70) und der Ballenpresse (12) und einem Aktuator (54) verbunden ist, wobei mit dem Aktuator (12) ein Winkel zwischen der Deichsel (14) und der Ballenpresse (12) einstellbar und/oder verstellbar ist, **dadurch gekennzeichnet, dass** die Steuereinheit (60) betreibbar ist:

    das Antriebssystem (70) und/oder den Aktuator (54) derart anzusteuern, dass die Kombination (1) von einer ersten Position (P1) in eine Entladeposition (P2) bewegt wird, und

    die Ballenpresse (12) derart anzusteuern, dass der Ballen (210) an der Entladeposition (P2) entladen wird, und

    das Antriebssystem (70) und/oder den Aktuator (54) derart anzusteuern, dass die Kombination (1) von der Entladeposition (P2) in die erste Position zurück bewegt wird.

2.  Kombination nach Anspruch 1, **dadurch gekennzeichnet, dass** die Steuereinheit (60) betreibbar ist, einen Entladewinkel (EW) und/oder die Entladeposition (P2) zu bestimmen.

3.  Kombination nach Anspruch 1 oder 2, **dadurch gekennzeichnet, dass** die Entladeposition (P2), insbesondere zumindest teilweise, in Abhängigkeit von einer Neigung an der Entladeposition (P2) und/oder einer Neigung der Kombination (1) bestimmbar ist.

4.  Kombination nach mindestens einem der vorangehenden Ansprüche, **dadurch gekennzeichnet, dass** die Kombination (1) einen Neigungssensor (162) zur Erfassung der Neigung der Kombination (1) in Form eines Neigungssignals umfasst, wobei die Steuereinheit (60) mit dem Neigungssensor (162) verbunden ist, und die Steuereinheit (60) das Neigungssignal vom Neigungssensor (162) empfängt, und/oder die Steuereinheit (60) derart betreibbar ist, dass mit der Steuereinheit (60) in Abhängigkeit vom Neigungssignal der Entladewinkel (EW) und/oder eine Entladeposition (P2) ermittelbar ist.

5.  Kombination nach mindestens einem der vorangehenden Ansprüche, **dadurch gekennzeichnet, dass** die Kombination (1) eine GPS-Einrichtung (32) zur Bestimmung der Position der Kombination (1) in Form eines Positionssignals umfasst, wobei die Steuereinheit (60) mit der GPS-Einrichtung (32) verbunden ist, und die Steuereinheit (60) das Positionssignal von der GPS-Einrichtung (32) empfängt, und/oder die Steuereinheit (60) derart betreibbar ist, dass mit der Steuereinheit (60) in Abhängigkeit vom Positionssignal der Entladewinkel (EW) und/oder die Entladeposition (P2) ermittelbar ist.

6.  Kombination nach mindestens einem der vorangehenden Ansprüche, **dadurch gekennzeichnet, dass** Kombination (1) eine Lenkeinrichtung (164) umfasst, wobei die Steuereinheit (60) mit der Lenkeinrichtung (164) verbunden ist, und die Steuereinheit (60) betreibbar ist, die Lenkeinrichtung (164) derart anzusteuern, dass die Kombination (1), insbesondere das Zugfahrzeug (10), mit der Lenkeinrichtung (164) an die Entladeposition (P2) lenkbar ist.

**7.** Kombination nach mindestens einem der vorangehenden Ansprüche, **dadurch gekennzeichnet, dass** die Kombination (1) eine Ein- und Ausgabeeinheit (74) umfasst, und die Steuereinheit (60) mit der Ein- und Ausgabeeinheit (74) verbunden ist, wobei mit der Ein- und Ausgabeeinheit (74) ein Entladesignal generierbar und an die Steuereinheit (60) sendbar (oder übermittelbar) ist.

**8.** Kombination nach mindestens einem der vorangehenden Ansprüche, **dadurch gekennzeichnet, dass** mit der Steuereinheit (60) ein Entladesignal generierbar ist, bevor eine Pressphase abgeschlossen ist oder wenn die Pressphase abgeschlossen ist oder während oder bevor eine Wickelphase abgeschlossen ist, oder wenn die Wickelphase abgeschlossen ist.

**9.** Kombination nach mindestens einem der vorangehenden Ansprüche, **dadurch gekennzeichnet, dass** die Steuereinheit (60) betreibbar ist, die Kombination (1), insbesondere eine Auswurfeinheit der Ballenpresse (12), derart anzusteuern, dass der Ballen (210) ausgeworfen wird, wenn der Entladewinkel (EW) und/oder die Entladeposition (P2) eingestellt ist.

**10.** Kombination nach mindestens einem der vorangehenden Ansprüche, **dadurch gekennzeichnet, dass** die Kombination (1), insbesondere das Zugfahrzeug (10), eine Ein- und Ausgabeeinheit (74) umfasst, und die Steuereinheit (60) mit der Ein- und Ausgabeeinheit (74) verbunden ist, wobei mittels oder mit der Steuereinheit (60) ein Bestätigungssignal generierbar ist, wenn der Entladewinkel (EW) eingestellt ist und/oder die Kombination (1) die Entladeposition (P2) erreicht hat, und/oder das Bestätigungssignal von der Steuereinheit (60) an die Ein- und Ausgabeeinheit (74) sendbar und mit der Ein- und Ausgabeeinheit (74) ausgebbar ist.

**11.** Kombination nach mindestens einem der vorangehenden Ansprüche, **dadurch gekennzeichnet, dass** die Kombination (1), insbesondere das Zugfahrzeug (10), eine Ein- und Ausgabeeinheit (74) umfasst, und die Steuereinheit (60) mit der Ein- und Ausgabeeinheit (74) verbunden ist, wobei mit der Ein- und Ausgabeeinheit (74) ein Auswurfsignal generierbar und an die Steuereinheit (60) sendbar ist oder das Auswurfsignal mit der Steuereinheit (60) generierbar ist und/oder die Steuereinheit (60) in Abhängigkeit vom Auswurfsignal betreibbar ist, die Kombination (1), insbesondere eine Auswurfeinheit (132), derart anzusteuern, dass der Ballen (210) auswerfbar ist, wenn die Entladeposition (P2) und/oder der Entladewinkel (EW) eingestellt ist.

**12.** Verfahren zum Betrieb einer Kombination (1) aus einem Zugfahrzeug (10) mit einem Antriebssystem (70) und einer mittels einer Deichsel (14) vom Zugfahrzeug (10) gezogenen Ballenpresse (12) zum Formen eines Ballens (210), insbesondere eine Kombination (1) nach einem der Ansprüche 1 bis 11.

**13.** Verfahren nach Anspruch 12, **dadurch gekennzeichnet, dass** ein Winkel zwischen der Deichsel (14) und der Ballenpresse (12) mit einem Aktuator (54) eingestellt und/oder verstellt wird, und die Kombination (1) mit dem Antriebssystem (70) und/oder dem Aktuator von einer ersten Position (P1) in eine Entladeposition (P2) bewegt wird, der Ballen (210) an der Entladeposition (P2) entladen wird, und die Kombination mit dem Antriebssystem (70) und/oder dem Aktuator von der Entladeposition (P2) in die erste Position (P1) zurückbewegt wird.

FIG. 1

FIG. 2

EP 4 442 107 A1

Fig. 3

Fig. 4

Fig. 5

Fig. 6a

Fig. 6b

300

Start

302

Optional - Entladesignal

304

Optional – Erfassung der
Neigung und/oder der
Position der Kombination

306

Optional – Bestimme
Entladeposition in
Abhängigkeit von der
Neigung und/oder
Position

308

Anfahren und/oder
Einstellen der
Entladeposition mit dem
Antriebssystem und/oder
dem Aktuator

310

Entladen des Ballens

312

Anfahren und/oder
Einstellen der ersten
Position mit dem
Antriebssystem und/oder
dem Aktuator

Fig. 7

Europäisches
Patentamt

European
Patent Office

Office européen
des brevets

**EUROPÄISCHER RECHERCHENBERICHT**

**Nummer der Anmeldung**

EP 24 16 2538

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2019 220445 A1 (DEERE & CO [US]) 24. Juni 2021 (2021-06-24) | 1-9,12, 13 | INV. A01F15/07 |
| Y | * Abbildungen 1-3 * * Absätze [0006], [0010] - [0012], [0017], [0029], [0032], [0033] * ----- | 10,11 | A01F15/08 A01B59/042 A01B67/00 A01B69/00 |
| Y | DE 10 2006 011135 A1 (DEERE & CO [US]) 20. September 2007 (2007-09-20) * Abbildung 1 * * Absätze [0007], [0021] - [0024], [0030] - [0033] * ----- | 10,11 | |
| A | DE 10 2009 047585 A1 (DEERE & CO [US]) 9. Juni 2011 (2011-06-09) * Abbildungen 1, 2 * * Absätze [0012] - [0022] * ----- | 1-13 | |
| A | EP 1 685 759 B1 (CLAAS SELBSTFAHRENDE ERNTEMASCHINEN GMBH [DE]) 15. August 2018 (2018-08-15) * Abbildungen 1, 2 * ----- | 1-13 | |
| A | EP 4 056 025 A1 (DEERE & CO [US]) 14. September 2022 (2022-09-14) * Abbildungen 6-9 * * Ansprüche 1, 2, 4 * * Absatz [0075] * ----- | 1-13 | **RECHERCHIERTE SACHGEBIETE (IPC)** A01F A01B |

Der vorliegende Recherchenbericht wurde für alle Patentansprüche erstellt

| Recherchenort | Abschlußdatum der Recherche | Prüfer |
|---|---|---|
| München | 17. Mai 2024 | Rahbauer, Sebastian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 16 2538

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2024

| Im Recherchenbericht angeführtes Patentdokument | Datum der Veröffentlichung | Mitglied(er) der Patentfamilie | Datum der Veröffentlichung |
|---|---|---|---|
| DE 102019220445 A1 | 24-06-2021 | DE 102019220445 A1 | 24-06-2021 |
| | | EP 3837961 A1 | 23-06-2021 |
| | | US 2021188240 A1 | 24-06-2021 |
| DE 102006011135 A1 | 20-09-2007 | AT E515183 T1 | 15-07-2011 |
| | | DE 102006011135 A1 | 20-09-2007 |
| | | EP 1832156 A1 | 12-09-2007 |
| | | US 2007221073 A1 | 27-09-2007 |
| DE 102009047585 A1 | 09-06-2011 | DE 102009047585 A1 | 09-06-2011 |
| | | EP 2509404 A1 | 17-10-2012 |
| | | US 2012240546 A1 | 27-09-2012 |
| | | WO 2011069902 A1 | 16-06-2011 |
| EP 1685759 B1 | 15-08-2018 | DE 102005004508 A1 | 17-08-2006 |
| | | EP 1685759 A1 | 02-08-2006 |
| | | RU 2376746 C2 | 27-12-2009 |
| EP 4056025 A1 | 14-09-2022 | EP 4056005 A1 | 14-09-2022 |
| | | EP 4056025 A1 | 14-09-2022 |

EPO FORM P0461

Für nähere Einzelheiten zu diesem Anhang : siehe Amtsblatt des Europäischen Patentamts, Nr.12/82